# EUROPEAN PATENT SPECIFICATION

(11) **EP 3 688 054 B1**
(45) Date of publication and mention of the grant of the patent: **10.11.2021**
(21) Application number: 18773481.9
(22) Date of filing: 28.09.2018
(51) Int. Cl.: C08G 18/48, C08G 18/75, C08G 18/10, C08G 18/38

(54) **REWORKABLE CROSSLINKED POLYTHIOURETHANES WITH INTRINSIC INJECTABILITY, REPAIRABILITY AND RECYCLABILITY**
INJIZIERBARE POLYTHIOURETHANNETZWERKE UND VERFAHREN ZU DEREN HERSTELLUNG
RÉSEAUX DE POLYTHIOURÉTHANE INJECTABLE ET LEURS PROCÉDÉS DE PRÉPARATION

(30) Priority: 29.09.2017 EP 17382650
(43) Date of publication of application: 05.08.2020
(73) Proprietor: Fundación Cidetec, 20014 Donostia-San Sebastián (ES); Instituto Universitario De Materiales Poliméricos - Polymat Universidad Del País Vasco/Euskal Herriko Unibertsitatea (UPV/EHU), 48940 Leioa (ES)
(72) Inventor: ERICE CASATORRE, Ainara, 20014 Donostia-San Sebastián (ES); RUIZ DE LUZURIAGA MARTÍNEZ, Alaitz, 20014 Donostia-San Sebastián (ES); REKONDO GARIN, Alaitz, 20014 Donostia-San Sebastián (ES); GENUA FERRERAS, Aratz, 20014 Donostia-San Sebastián (ES); AZCUNE TOLOSA, Itxaso, 20014 Donostia-San Sebastián (ES); GRANDE, Hans-Jürgen, 20014 Donostia-San Sebastián (ES); FERNANDEZ SAN MARTIN, Mercedes, 20018 Donostia-San Sebastián (ES); APARICIO, Xabier, 48320 Ajangiz (ES)
(74) Representative: ZBM Patents - Zea, Barlocci & Markvardsen
(86) International application number: PCT/EP2018/076451
(87) International publication number: WO 2019/063787

(56) References cited:
- EP-A1- 2 921 511
- US-A1- 2017 009 002

## Description

### Technical Field

The present invention relates to the field of polymer chemistry, more particularly to injectable, reprocessable and recyclable materials. In particular, the invention relates to an injectable, reprocessable and recyclable crosslinked polythiourethane polymer and to processes for its preparation. The invention also relates to the use of this new polymer.

### Background Art

Thermoset materials are those having a crosslinked network fixed by irreversible covalent bonds. These polymers exhibit excellent mechanical strength, solvent resistance and thermal stability. The above mentioned properties make thermoset materials suitable for numerous applications, such as, biomedical materials, adhesives, coatings and structural applications. However, the impossibility to be melted after their curing step has been carried out due to the irreversibility of the covalent bonds, is one of the major drawbacks of classical thermosets; which makes their reprocessing and recycling impossible. In this regard, some recent work has led to the first examples of reprocessable/recyclable thermoset polymers based on dynamic covalent bonds.

In the last years, different dynamic covalent chemistries have been applied for the obtaining of unconventional polymer networks with intriguing properties. Thus, new concepts such as Covalent Adaptable Networks (CANs) have emerged as a hot topic in polymers and materials science. The idea underneath is to introduce exchangeable bonds in a polymer network, which can rearrange thermally (or under another stimulus), while keeping the network integrity.
CANs may be classified into two groups depending on their exchange mechanism. The first group of CANs makes use of a dissociative crosslink exchange mechanism. In this exchange, chemical bonds are first broken and then reformed at another place. The second group of CANs makes use of associative bond exchanges between polymer chains, in which the original crosslink is only broken when a new covalent bond to another position has been formed.

In dissociative CANs, the materials can achieve very fast topology rearrangements (stress relaxation and flow) because of a decrease in connectivity. This temporary loss of crosslinks typically results in a sudden viscosity drop, as is normally observed for thermoplastic materials. Upon cooling, the crosslinks are formed again, usually to the same extent as in the starting material, thus preserving or re-installing the desirable thermosetting properties such as stiffness and insolubility. In principle, these materials would be injectable, but still solvent resistant at ambient temperatures.

Up to now, Diels-Alder reversible chemistry has been exploited as a promising pathway for constructing injectable, reshapeable and recyclable materials, due to the repeatedly thermal reversibility of this moiety. However, injectable polymer networks based on Diels-Alder chemistry still has some limitations and drawbakcs for its industrial implementation such as complex synthetic procedure of a hardener based on this chemistry and/or high cost of the raw materials based on this chemistry. Thus, it would be desirable to overcome these limitations and create a new generation of injectable polymer networks based on other reversible chemistries.

On the other hand, polythiourethanes have attracted increasing industrial attention recently and been explored for optical and advanced coating applications, owing to higher refractive indexes than their polyurethane counterparts.

In spite of the efforts made, therefore, there is still the need of providing polythiourethanes with improved properties for its use at industrial scale.

### Summary of Invention

The present inventors have developed a polythiourethane network which is injectable, reprocessable and recyclable.

Surprisingly, the behaviour of the polythiourethane network of the invention is due to the thermoreversibility shown by the specific nature of the thiouretane group of the invention: thiourethane linkages are broken when the polymer is heated at a temperature above 130 °C, giving rise to the formation of thiol and isocyanate intermediate species which, at the same time, gives rise to the transition from a solid to liquid state of the polymer. When the material in its liquid state has been used (p.e. for conventional injection process), then the temperature can be decreased again to 100 °C, the thiourethane bonds being reestablished again due to the action of a catalyst included in the polythiourethane network of the invention, thus turning to the initial solid state and mantaining the same mechanical properties and chemical resistance than the material before this process. This surprising behaviour of the polythiourethane network of the invention provides the possibility to manufacture articles based in this material by conventional injection process starting from the crosslinked material in powder or pellets form.

It is remarkable that it was found that the change from solid to liquid and again to solid did not negatively affect nor the mechanical, thermal and chemical properties and neither the further reprocessability and recyclability of the material, that is, did not reduce the quality or half-life of the material.

It is the first time that such thermoreversibility is achieved in polythiourethane networks.

Thus, in a first aspect the present invention provides an injectable, reprocessable and recyclable polymer network comprising
a) units of formula (I) 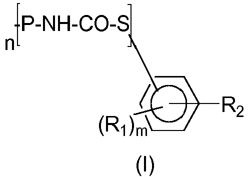 wherein
   R₂ is a radical selected from the group consisting of radicals of formula (II), and (III):

      *—Z-CO-NH-P (II) 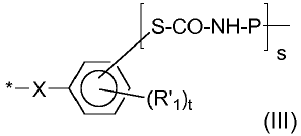
   R₁ and R₁' are radicals independently selected from the group consisting of: -H, (C₁-C₂₀)alkyl, (C₅-C₁₄)aryl, -OR₃, -(CO)R₄, -O(CO)R₅, -(SO)R₆, -NH-CO-R₇, -COORs, -S-CO-NH-R₉, -NR₁₀R₁₁, -NO₂, -SH and halogen;
   P is a polymeric chain,
   * denotes the position through which R₂ binds to the phenyl ring of the unit of formula (I),
   X is a biradical selected from the group consisting of: -CH₂-, -CH=CH-, -O-, -S-, -CO-, -S(O₂)-, -Si(R₁₂R₁₃)-, and -NH-;
   Z is a radical selected from -S- and ―-NR₁₇-;
   R₃ to R₁₁ are radicals independently selected from the group consisting of: (C₁-C₂₀)alkyl, and (C₅-C₁₄)aryl;
   R₁₂ and R₁₃ are radicals independently selected from the group consisting of (C₁-C₅)alkyl, and (C₅-C₁₄)aryl;
   R₁₇ is selected from the group consisting of -H, (C₁-C₂₀)alkyl, and (C₅-C₁₄)aryl;
   (C₅-C₁₄)aryl represents a ring system with 1-3 rings which comprises from 5 to 14 carbon atoms, the rings being saturated, partially unsaturated, or aromatic; and being fused, partially fused or isolated; being at least one of the rings an aromatic ring; and the ring system being optionally substituted by one or more radicals independently selected from the group consisting of (C₁-C₆)alkyl, (C₁-C₆)haloalkyl, (C₁-C₆)alkoxy, nitro, cyano, and halogen;
   "m" is an integer selected from 3 and 4;
      "n" is an integer selected from 1 and 2; provided that "n" + "m" is 5;
      "t" is an integer selected from 3 and 4; and
      "s" is an integer selected from 1 and 2; provided that "t" + s is 5; and
b) a catalyst compound leading to the formation of a thiourethane bond, the catalyst compound being selected from a metal catalyst and a catalyst compound having a boiling temperature equal or higher than 100 °C when measured at atmospheric pressure.

The present invention further provides an injectable, reprocessable and recyclable polymer network comprising
a) units of formula (I) 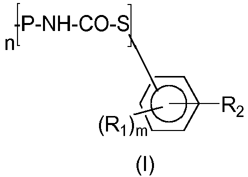 wherein
   R₂ is a radical selected from the group consisting of radicals of formula (II), and (III):

      *―S-CO-NH-P (II) 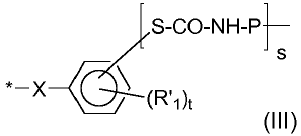
   R₁ and R₁' are radicals independently selected from the group consisting of: -H, (C₁-C₂₀)alkyl, (C₅-C₁₄)aryl, -OR₃, -(CO)R₄, -O(CO)R₅, -(SO)R₆, -NH-CO-R₇, -COORs, -S-CO-NH-R₉, -NR₁₀R₁₁, -NO₂, -SH and halogen;
   P is a polymeric chain,
   * denotes the position through which R₂ binds to the phenyl ring of the unit of formula (I),
   X is a biradical selected from the group consisting of: -CH₂-, -CH=CH-, -O-, -S-, -CO-, -S(O₂)-, -Si(R₁₂R₁₃)-, and -NH-;
   R₃ to R₁₁ are radicals independently selected from the group consisting of: (C₁-C₂₀)alkyl, and (C₅-C₁₄)aryl;
   R₁₂ and R₁₃ are radicals independently selected from the group consisting of (C₁-C₅)alkyl, and (C₅-C₁₄)aryl;
   (C₅-C₁₄)aryl represents a ring system with 1-3 rings which comprises from 5 to 14 carbon atoms, the rings being saturated, partially unsaturated, or aromatic; and being fused, partially fused or isolated; being at least one of the rings an aromatic ring; and the ring system being optionally substituted by one or more radicals independently selected from the group consisting of (C₁-C₆)alkyl, (C₁-C₆)haloalkyl, (C₁-C₆)alkoxy, nitro, cyano, and halogen;
   "m" is an integer selected from 3 and 4;
      "n" is an integer selected from 1 and 2; provided that "n" + "m" is 5;
      "t" is an integer selected from 3 and 4; and
      "s" is an integer selected from 1 and 2; provided that "t" + s is 5; and
b) a catalyst compound leading to the formation of a thiourethane bond, the catalyst compound being selected from a metal catalyst and a catalyst compound having a boiling temperature equal or higher than 100 °C when measured at atmospheric pressure.

As it is shown below, the present inventors have found that the aromatic nature of the thiol unit of formula (I) is crucial for the thermoreversibility of the polythiourethane polymer network and thus for its injectability and reprocessability: when an aliphatic thiol was used instead of an aromatic one, the resulting polythiourethane polymer, when heated, did not flow but degrade. That is, there was a loss of the injectability and reprocessability of the polythiourethane polymer as the heated material did not recover the initial solid state. What is even more remarkable is that this worsening in the injectability and reprocessability due to the aliphatic thiol was not overcome when a polymeric chain ("P") including aromatic rings was used. Therefore, it can be concluded that the aromatic character of the thiol of unit of formula (I) is determinant for the properties of the polymeric network of the invention.

In addition to the above, the present inventors have also found that the nature of the catalyst included in the network of the invention, affects to the reprocessability and injectability of the polymer. In this regard, it was found that the catalyst must have a boiling temperature equal or higher than 100 °C to avoid its volatilization when the polymer is heated to make the transition solid-liquid. As it is shown below, the polythiourethane obtained using triethylamine as catalyst, which has a boiling point of 90 °C, did not return to the initial module. On the contrary, when DMAP was used as catalyst (which has a boiling point of 162 °C), the polymer could be reprocessable 3 cycles. Without being bound to the theory the present inventors believe that the catalyst is needed in the polymer network when the cooling process has to take place, to help in the cross-linking reaction between aromatic thiol and isocianate species of formula:

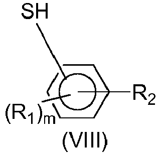

P-NCO (VII)

wherein R₁, R₂, "m" and "P" are as defined above.

In this way, the polythiourethane turns to the initial material.

Altogether, the behavior shown by the polymer network of the invention is very attractive for a fast and easy implementation in real industrial applications.

Advantageously, the polymer of the first aspect of the invention can be easily synthesized from inexpensive and readily available starting materials.

Thus, in a second aspect, the present invention provides a process for preparing an injectable, reprocessable and recyclable polymer as defined in the first aspect of the invention, the process comprising the reaction between (a) an isocyanate-functionalised compound selected from an isocyanate-funtionalised polymer having a functionality equal or higher than 2, and a polyisocyanate monomer having two or more isocyanate groups, and (b) an aromatic thiol-functionalised compound (also referred hereinafter as "aromatic thiol") which is selected from:
- a thiol compound of formula (V) or (Vbis) 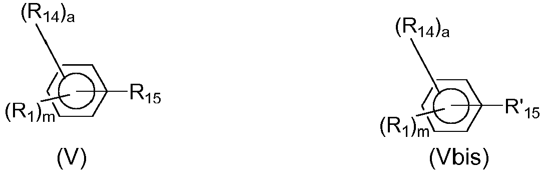
- a thiol monomer having two or more aromatic reactive groups, the same or different, selected from a thiol compound of formula (V) and a thiol compound of formula (Vbis); or a mixture of thiol monomers, each one of them having two or more thiol compounds, the same or different, selected from a thiol of formula (V) and one of formula (Vbis); and
- a polymer having two or more aromatic reactive groups selected from a thiol of formula (V) and a thiol of formula (Vbis);
wherein
R₁₅ is selected from -SH, and a radical of formula (VI) 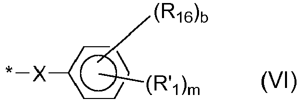
R'₁₅ is ―NHR₁₈;
R₁₈ is a radical selected from -H, (C₁-C₂₀)alkyl and (C₅-C₁₄)aryl;
R₁, R₁', X, "m" are as defined above,
"a" is an integer selected from 1 and 2; provided that "m" + a is 5,
"b" is an integer selected from 1 and 2; provided that "m" + b is 5, and
R₁₄, and R₁₆ represents -SH,
   provided that at least one of the isocyanate-functionalised compound and the aromatic thiol is a polymer,
   the reaction being performed:
      - at a temperature comprised from -30 to 200 °C,
      - in the presence of a catalyst compound leading to the formation of a thiourethane bond between the isocyanate group from the isocyanate-functionalised compound with functionality equal or higher than 2, and the thiol group from the aromatic compound of formula (V), the catalyst compound being selected from a metal catalyst and a compound having a boiling temperature equal or higher than 100 °C at atmospheric pressure; and
      - the molar ratio between the number of moles of isocyanate groups and the total number of moles of reactive groups (either thiols or thiol+NHR₁₈, depending on the case) is from 1.00 to 1.80.

The present invention further provides a process for preparing an injectable, reprocessable and recyclable polymer as defined in the first aspect of the invention, the process comprising the reaction between (a) an isocyanate-functionalised compound selected from an isocyanate-functionalised polymer having a functionality equal or higher than 2, and a polyisocyanate monomer having two or more isocyanate groups, and (b) an aromatic thiol which is selected from a compound of formula (V), a polythiol monomer having two or more aromatic thiols of formula (V) and a polymer having two or more aromatic thiols of formula (V) 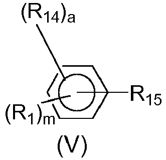 wherein
R₁₅ is selected from -SH, and a radical of formula (VI) 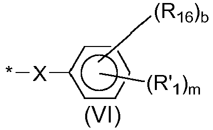
R₁, R₁', X, "m" are as defined above,
"a" is an integer selected from 1 and 2; provided that "m" + a is 5,
"b" is an integer selected from 1 and 2; provided that "m" + b is 5,and R₁₄ and R₁₆ represents -SH,
provided that at least one of the isocyanate-functionalised compound and the aromatic thiol is a polymer,
the reaction being performed:
   - at a temperature comprised from -30 to 200 °C,
   - in the presence of a catalyst compound leading to the formation of a thiourethane bond between the isocyanate group from the isocyanate-functionalised compound, and the thiol group from the aromatic compound of formula (V), the catalyst compound being selected from a metal catalyst and a compound having a boiling temperature equal or higher than 100 °C when measured at atmospheric pressure; and
   - the molar ratio between the number of moles of isocyanate groups and the number of moles of thiol groups is from 1.00 to 1.80.

As it is shown below, the present inventors have also found that the polymer network of the invention shows such reprocessability, recyclability and injectability due to the particular molar ratio between thiol and isocyanate groups. When the process was performed with an excess of isocyanate groups (molar ratio isocyanate:thiol 1:0.8), it was found, measuring the storage modulus (G') and loss modulus (G") dependence with temperature, that it did not flow at high temperatures as the polymer network of the invention and that heating above 225°C the material got degraded. Consequently, it can be concluded that isocyanate cannot be in excess if a dynamic behavior of thiourethane bond can be achieved as reported in the present invention.

The injectable, reprocessable and recyclable polymer of the invention can also be defined by its preparation process. Thus, in a third aspect the present invention provides an injectable, reprocessable and recyclable polymer obtainable by the process of the invention described above.

In a fourth aspect the present invention provides a process for recycling an injectable, reprocessable and recyclable crosslinked polymer comprising units of formula (I) as defined in the first or third aspect of the invention, the process comprising the step of applying heat to the polymer.

In a fifth aspect the present invention provides an article of manufacture made of the injectable, reprocessable and recyclable cross-linked polymer as defined in the first or third aspect of the invention.

And, finally, in a sixth aspect the present invention provides a method for the manufacture of an article as defined in the fifth aspect of the invention, which comprises subjecting the polymer as defined in the first or third aspect of the invention to reaction injection molded technique.

### Brief Description of Drawings

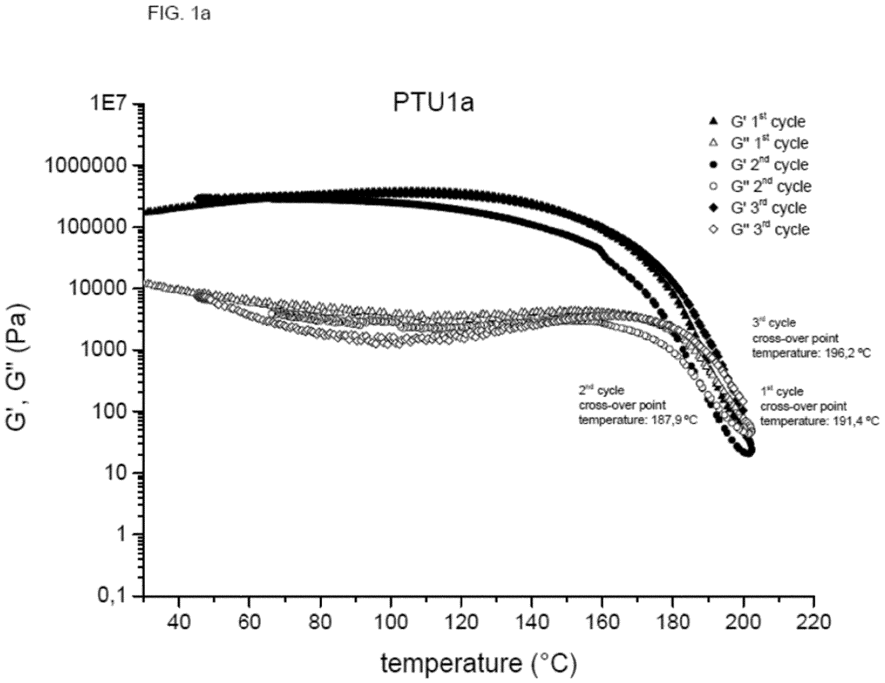

Fig.1a: storage (G') and loss (G") modulus vs. temperature results obtained in the oscillatory temperature ramp experiment carried out in PTU1a material, obtained from the reaction between the tris-isocyanate terminated prepolymer and benzene-1,3-dithiol, with a NCO:SH ratio of 1:1.05 and using DMAP as catalyst.

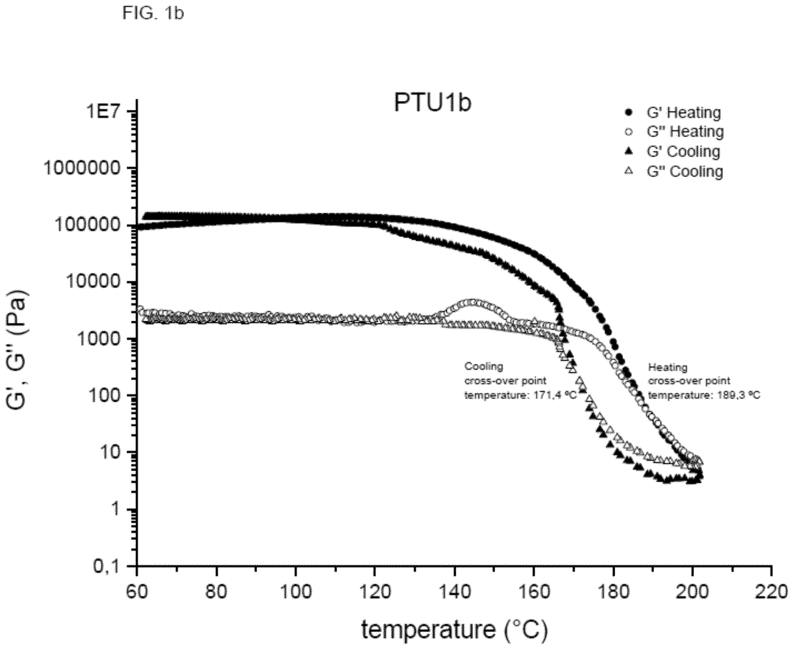

Fig.1b: storage (G') and loss (G") modulus vs. temperature results obtained in the oscillatory temperature ramp experiment carried out in PTU1b material, obtained from the reaction between the tris-isocyanate terminated prepolymer and benzene-1,3-dithiol, with a NCO:SH ratio of 1:1.05 and using DMAE as catalyst.

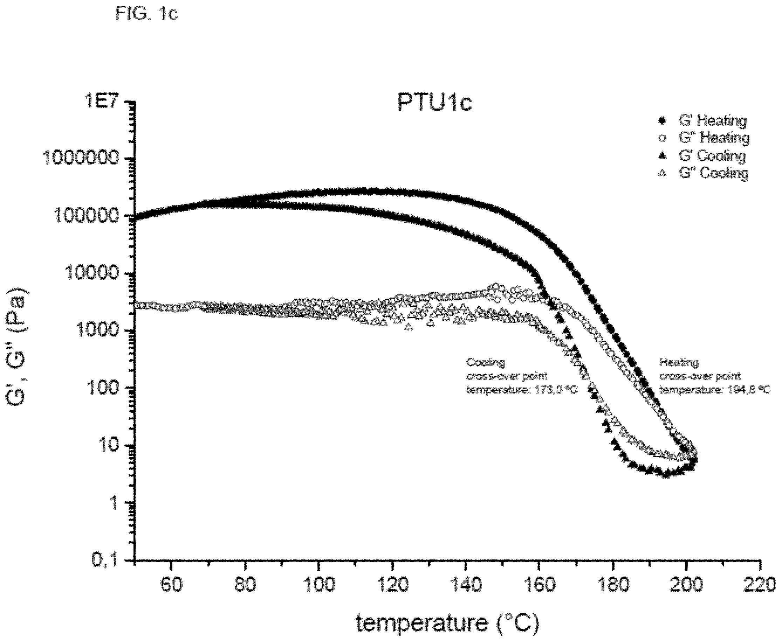

Fig.1c: storage (G') and loss (G") modulus vs. temperature results obtained in the oscillatory temperature ramp experiment carried out in PTU1c material, obtained from the reaction between the tris-isocyanate terminated prepolymer and benzene-1,3-dithiol, with a NCO:SH ratio of 1:1.05 and using 1-methylimidazole as catalyst.

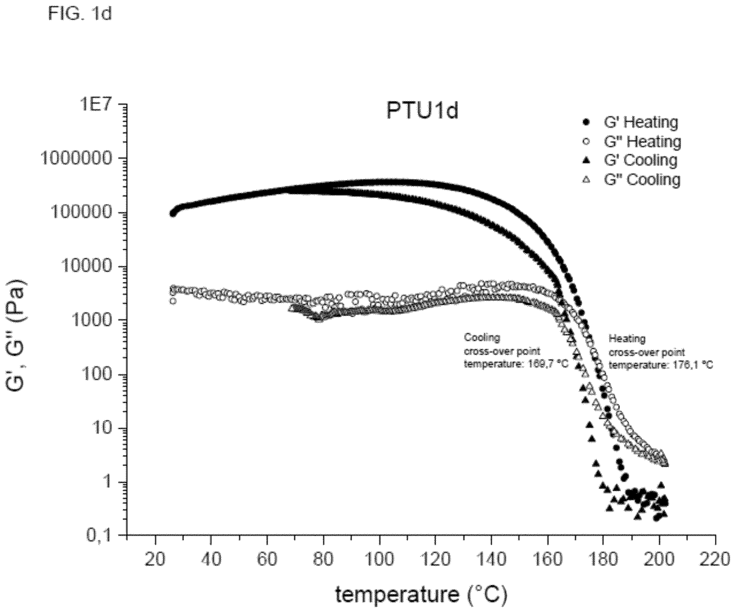

Fig.1d: storage (G') and loss (G") modulus vs. temperature results obtained in the oscillatory temperature ramp experiment carried out in PTU1d material, obtained from the reaction between the tris-isocyanate terminated prepolymer and benzene-1,3-dithiol, with a NCO:SH ratio of 1:1.05 and using DABCO as catalyst.

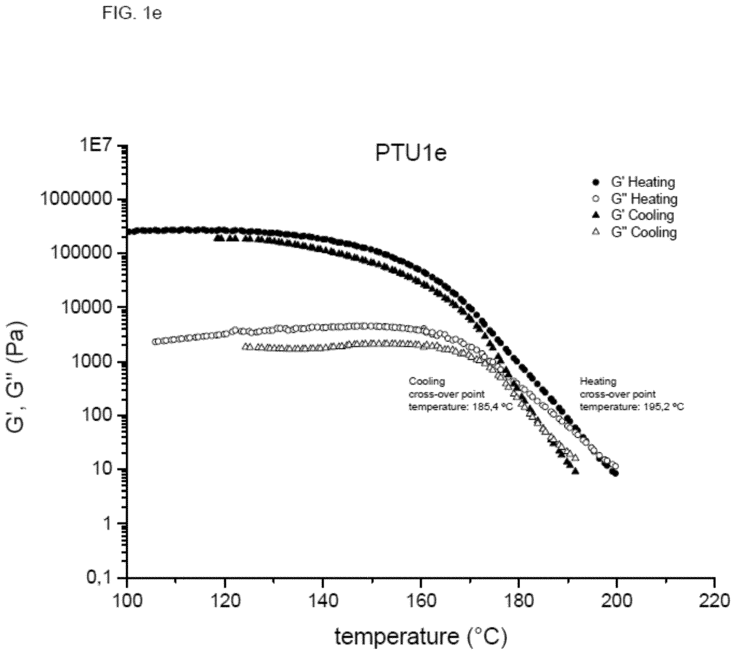

Fig.1e: storage (G') and loss (G") modulus vs. temperature results obtained in the oscillatory temperature ramp experiment carried out in PTU1e material, obtained from the reaction between the tris-isocyanate terminated prepolymer and benzene-1,3-dithiol, with a NCO:SH ratio of 1:1.05 and using DBTDL as catalyst.

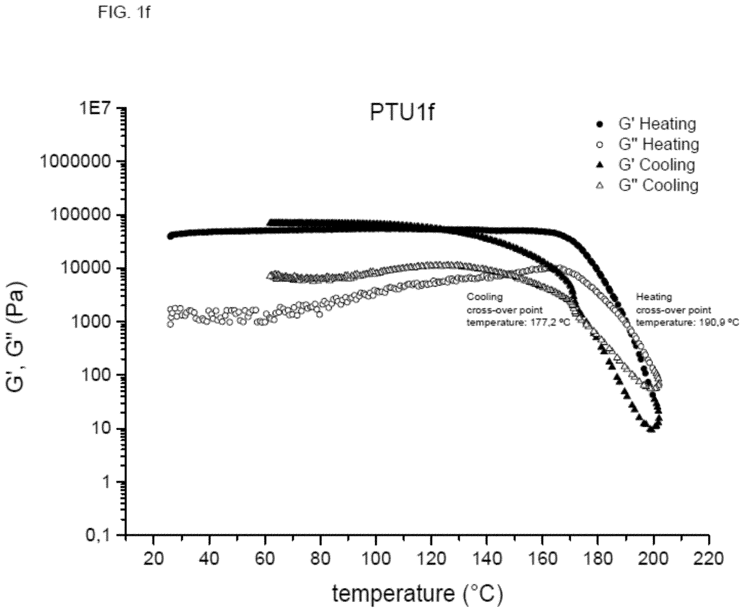

Fig.1f: storage (G') and loss (G") modulus vs. temperature results obtained in the oscillatory temperature ramp experiment carried out in PTU1f material, obtained from the reaction between the tris-isocyanate terminated prepolymer and 4,4'-thiobisbenzenethiol, with a NCO:SH ratio of 1:1.05 and using DMAP as catalyst.

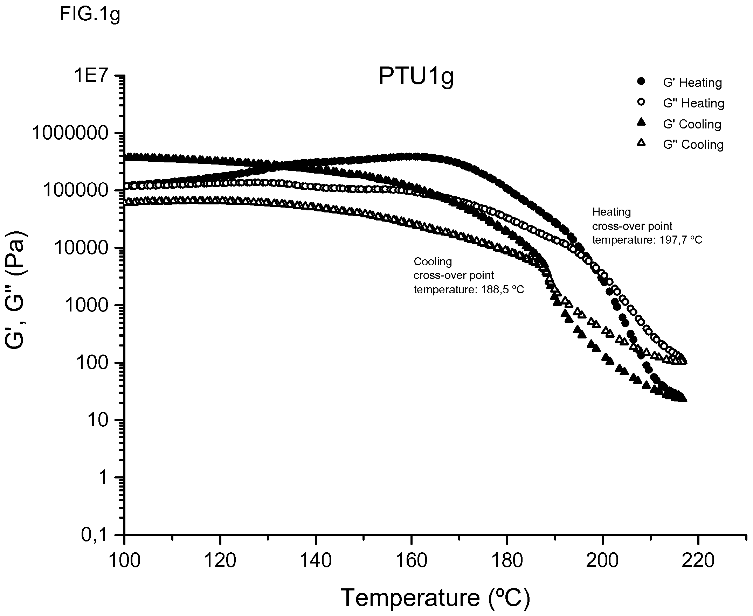

Fig. 1g: storage (G') and loss (G") modulus vs. temperature results obtained in the oscillatory temperature ramp experiment carried out in PTU1g material, obtained from the reaction between the tris-isocyanate terminated prepolymer and 2-aminothiophenol, with NCO: (SH + NH₂) ratio of 1:1.05 and using DMAP as catalyst.

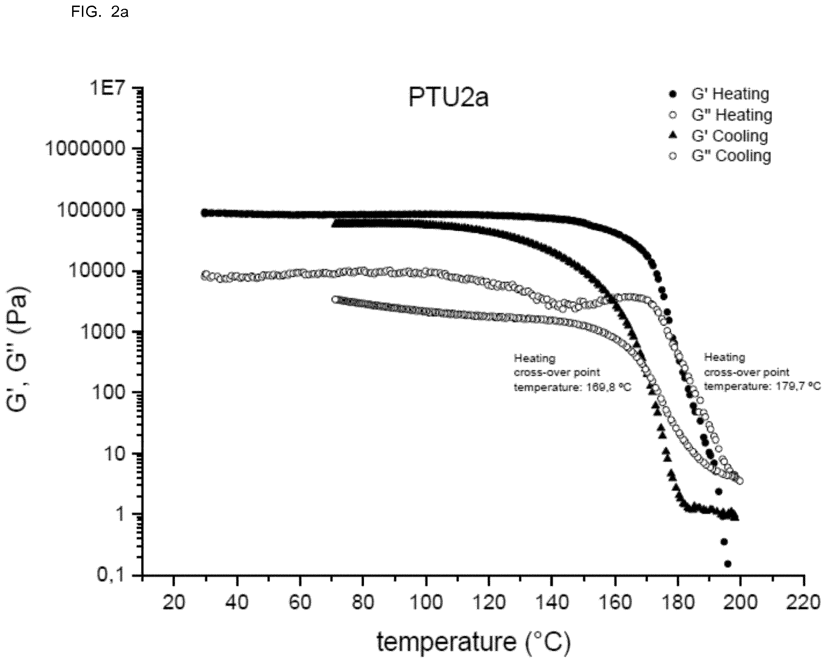

Fig. 2a : storage (G') and loss (G") modulus vs. temperature results obtained in the oscillatory temperature ramp experiment carried out in PTU2a material, obtained from the reaction between the tris-isocyanate terminated prepolymer and benzene-1,3-dithiol, with a NCO:SH ratio of 1:1.05 and using triethylamine as catalyst.

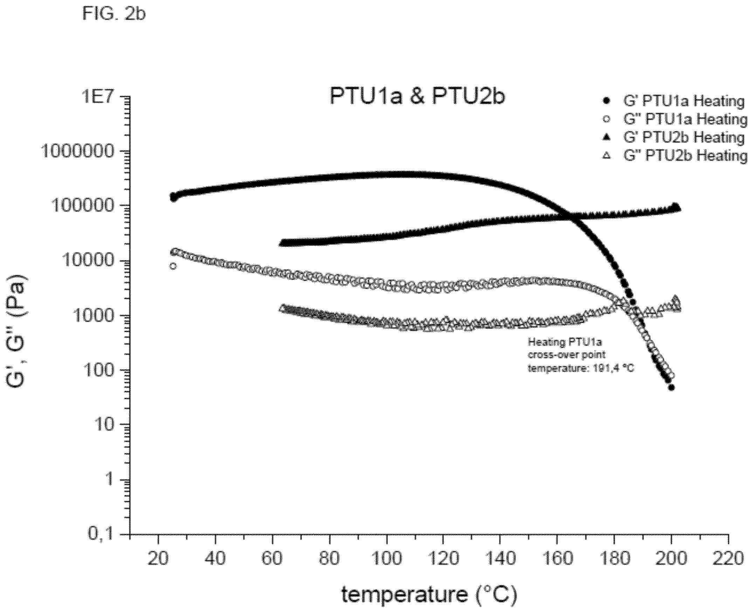

Fig. 2b: storage (G') and loss (G") modulus vs. temperature results obtained in the oscillatory temperature ramp experiment carried out in PTU1a and PTU2b materials, obtained from the reaction between the tris-isocyanate terminated prepolymer and benzene-1,3-dithiol, with a NCO:SH ratio of 1:1.05 in PTU1a and 1:0.8 in PTU2b material, using DMAP as catalyst.

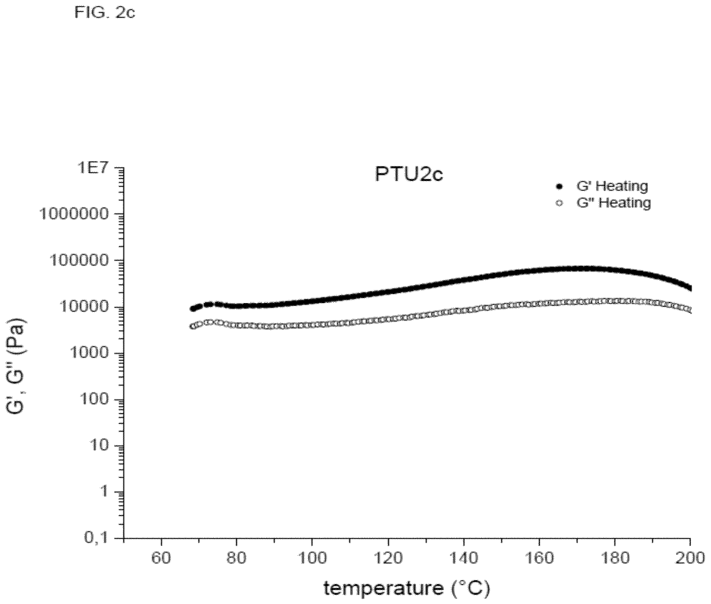

Fig. 2c: storage (G') and loss (G") modulus vs. temperature results obtained in the oscillatory temperature ramp experiment carried out in PTU2c material, obtained from the reaction between the aromatic tris-isocyanate terminated prepolymer Voramer MR1101 and Glykol Di(3-mercaptopropionate) aliphatic thiol compound, with a NCO:SH ratio of 1:1.05 and using DMAP as catalyst.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

For the purposes of the invention, any ranges given include both the lower and the upper end-points of the range. Ranges given, such as temperatures, times, and the like, should be considered approximate, unless specifically stated.

In a first aspect the present invention provides an injectable, reprocessable and recyclable polymer network.

The terms "polymer network", "cured polymer" and "cross-linked polymer" have the same meaning, can be used interchangeably and refers to a polymer wherein different polymeric chains (such as oligomers), which can be linear or branched, are linked through at least covalent bonds. In one embodiment, all the chains forming the polymer are cross-linked. In another embodiment, about from 10 to 85% of the chains forming the polymer are cross-linked.

As used herein, "polymeric chain" refers to compounds formed by the joining of monomers linked by covalent bonds. The polymeric chain can be homopolymeric, if it is made of the same monomer, or copolymeric, when it is made from monomers of different chemical nature. Illustrative non-limitative examples or polymeric chains are alkyd resin, epoxy resin, phenolic resin, polyvinyl halides, polyacetal, polyacrylics, polyalkylenes, polyalkenylenes, polyalkynylenes, polyamic acids, polyamides, polyamines, polyanhydrides, polyarylenealkylenes, polyarylenes, polyazomethines, polybenzimidazoles, polybenzothiazoles, polybenzyls, polycarbodiimides, polycarbonates, polycarbones, polycarboranes, polycarbosilanes, polycyanurates, polydienes, polyester-polyurethanes, polyesters, polyetheretherketones, polyether-polyurethanes, polyethers, polyhydrazides, polyimidazoles, polyimides, polyisocyanurates, polyketones, polyolefines, polyoxyalkylenes, polyoxyphenylenes, polyphenyls, polyphosphazenes, polypyrroles, polypyrrones, polyquinolines, polyquinoxalines, polysilanes, polysilazanes, polysiloxanes, polysilsesquioxanes, polysulfides, polysulfonamides, polysulfones, polythiazoles, polythiomethylenes, polythiophenylenes, polyureas, polyurethanes, polyvinyl acetals, polyvinyl butyrals, polyvinyl formals, polyvinyl alkanoates, vinyl polymers, and natural polymers. In another embodiment, P is a homopolymer or copolymer comprising a polymeric chain selected from the group consisting of: alkyd resin, epoxy resin, phenolic resin, polyvinyl halides, polyacetal, polyacrylics, polyalkylenes, polyalkenylenes, polyalkynylenes, polyamides, polyamines, polyanhydrides, polycarbonates, polyester-polyurethanes, polyesters, polyetheretherketones, polyether-polyurethanes, polyethers, polyimidazoles, polyimides, polyisocyanurates, polyketones, polyolefines, polyoxyalkylenes, polyoxyphenylenes, polypyrroles, polysiloxanes, polysulfides, polysulfonamides, polysulfones, polythiazoles, polythiomethylenes, polythiophenylenes, polyureas, polyurethanes, polyvinyl acetals, polyvinyl butyrals, polyvinyl formals polyvinyl alkanoates, vinyl polymers, and natural polymers. In another embodiment, P is a polymeric chain selected from the group consisting of: epoxy resin, phenolic resin, polyvinyl halides, polyacetal, polyacrylics, polyamides, polyamines, polycarbonates, polyester-polyurethanes, polyesters, polyether-polyurethanes, polyethers, polyimides, polyketones, polyolefines, polyoxyalkylenes, polyoxyphenylenes, polysiloxanes, polysulfides, polysulfones, polythiomethylenes, polyureas, polyurethanes, polyvinyl acetals, and polyvinyl alkanoates, and natural polymers. In still another embodiment P is a polyether chain. Illustrative non-limitative examples of polyethers are: polyoxymethylene (POM), polyacetal, polyethylene oxide (PEO), polypropylene oxide (PPO), polytetrahydrofuran (PTHF). In still another embodiment, P is a polyethylene oxide. In still another embodiment, P is a polyurethane polymer.

The term "monomer" means, as recognized by IUPAC, a molecule that has one or more polymerizable end-groups that can undergo polymerization thereby contributing constitutional units to the essential structure of a macromolecule (PAC, 1996, 68, 2287 (Glossary of basic terms in polymer science (IUPAC Recommendations 1996)) on page 2289). The unit of formula (I) is considered, according to the present invention, as a monomer.

In the present invention, the terms "cured"/"curing" and "cross-linked"/"cross-linking" have the same meaning and can be used interchangeably. The term "curing" refers to the toughening or hardening of a polymer material by cross-linking of polymer chains, brought about by cross-linker agents such as commercially available chemical additives, ultraviolet radiation, electron beam or heat. In this process the polymer viscosity drops initially upon the application of heat, passes through a region of maximum flow and begins to increase as the chemical reactions increase the average length and the degree of cross-linking between the constituent polymers. This process continues until a continuous 3-dimensional network of polymer chains is created - this stage is termed gelation.

The term "reprocessable" is to be understood as that the polymer can change its form, applying heat. The selection of specific heat conditions will depend on the specific nature of the material and shape of final part. Forms part of the routine tasks of the skilled person in the art the selection of appropriate pressure and heat conditions.

The term "recyclable" is to be understood as that the polymer can be grinded and remanufactured applying heat. The selection of specific heat conditions will depend on the specific nature of the material and shape of final part. Forms part of the routine tasks of the skilled person in the art the selection of appropriate pressure and heat conditions.

The term "injectable" is to be understood as that the polymer network can be melted by heating and injected in a conventional injection molding machine.

According to the present invention when the ring system is formed by "isolated" rings means that the ring system is formed by two, three or four rings and said rings are bound via a bond from the atom of one ring to the atom of the other ring. The term "isolated" also embraces the embodiment in which the ring system has only one ring. Illustrative non-limitative examples of known ring systems consisting of one ring are those derived from: cyclopropyl, cyclobutyl, cyclopentyl, cyclohexyl, cycloheptyl, cyclopropenyl, cyclobutenyl, cyclopentenyl, phenyl, and cycloheptenyl.

According to the present invention when the ring system has rings "totally fused", means that the ring system is formed by two, three or four rings in which two or more atoms are common to two adjoining rings. Illustrative non-limitative examples are 1,2,3,4-tetrahydronaphthyl, 1-naphthyl, 2-naphthyl, anthryl, or phenanthryl.

According to the present invention when the ring system is "partially fused" it means that the ring system is formed by three or four rings, being at least two of said rings totally fused (i.e. two or more atoms being common to the two adjoining rings) and the remaining ring(s) being bound via a bond from the atom of one ring to the atom of one of the fused rings.

Throughout the description and claims, the term "alkyl" refers to a saturated linear or branched hydrocarbon chain containing the number of carbon atoms indicated in the claims and in the description. Examples of alkyl groups include, but are not limited to: methyl, ethyl, propyl, iso-propyl, butyl, isobutyl, tert-butyl, pentyl, hexyl, heptyl, octyl, nonanyl and decanyl, among others.

The term "(C₁-C₆)alkoxy" means "-O-(C₁-C₆)alkyl", in which the term "alkyl" has the previously given definition. Examples of alkoxy group include, but are not limited to, methoxy, ethoxy, "n"-propoxy, isopropoxy, "n"-butoxy, isobutoxy, sec-butoxy and tert-butoxy.

The term "(C₁-C₆)haloalkyl" refers to a saturated linear or branched hydrocarbon chain containing from 1 to 6 carbon atom members, wherein at least one hydrogen is replaced by a halogen.

In the context of the invention, the terms "halo" and "halogen" are used interchangeably and refer to a halogen group selected from chloro, fluoro, bromo and iodo.

In the present invention the catalyst compound included in the polymeric network is one (a) with the ability of leading to the formation of a thiourethane bond, between an isocyanate radical and a thiol radical, and (b) has a boiling temperature equal or higher than 100 °C.

In the present invention, the term "boiling temperature" is to be understood as the temperature at which the vapor pressure of the liquid equals the pressure surrounding the liquid and the liquid changes into a vapor. The boiling point of a liquid varies depending upon the surrounding environmental pressure. A liquid in a partial vacuum has a lower boiling point than when that liquid is at atmospheric pressure.

In one embodiment, the catalyst referred in any of the aspects of the present invention is one which the catalyst has a boiling temperature comprised from 100 to 250 °C.

There are well-known catalysts complying with the above requirements. In some embodiments, the catalyst is a metal catalyst, such as tin, bismuth, zinc, stannous, zirconium, aluminium or iron catalysts or a combination thereof; a nitrogen-containing catalyst (such as an amine catalyst); or any combination thereof. In one embodiment, the catalyst is a nitrogen-containing catalyst or a metal catalyst. In one embodiment, the catalyst is a nitrogen-containing catalyst. In another embodiment, the catalyst is an amine-containing catalyst. In another embodiment, the "amine" can be selected from the group consisting of a tertiary amine, an amine initiated polypropylene glycol, an aliphatic amine, and amine-containing ring systems. In other embodiments, the catalyst can be a polyether amine; alternatively, a polyalkylene amine; or alternatively, a tertiary amine polyol. In yet other embodiments, the amine catalyst can be a polyamine comprising at least two amine groups. In another embodiment, the catalyst comprises an amine radical of formula NR₂₂R₂₃R₂₄, wherein R₂₂, R₂₃ and R₂₄ are independently selected from -H; (C₁-C₁₀)alkyl; (C₁-C₁₀)alkyl substituted by one or more radicals selected from -OH, -NH₂, nitro and halogen; (C₁-C₁₀)alkenyl; (C₁-C₁₀)alkenyl substituted by one or more radicals selected from -OH, -NH₂, nitro and halogen; (C₁-C₁₀)alkinyl; (C₁-C₁₀)alkinyl substituted by one or more radicals selected from -OH, -NH₂, nitro and halogen; and a ring comprising from 5 to 6 members selected from ―CH₂, CH, and C, "N", NH, O, S, and SH; provided that at least one of R₂₂, R₂₃ and R₂₄ is other than -H . In another embodiment, the catalyst comprises a known ring system comprising from 1 to 3 rings each ring comprising from 5 to 7 members which are selected from ―CH₂, CH, and C, "N", NH, O, S, and SH, provided that at least one of the members is "N" or NH; the rings being saturated, partially unsaturated, or aromatic; and being fused, partially fused or isolated; and the ring system being optionally substituted by one or more radicals independently selected from the group consisting of (C₁-C₆)alkyl, (C₁-C₆)haloalkyl, (C₁-C₆)alkoxy, nitro, cyano, and halogen.

Suitable nitrogen-containing catalysts will be apparent to those of skill in the art and are to be considered within the scope of the present invention. Illustrative non-limitative examples are: 2,4,6-Tris(Dimethylaminomethyl)phenol, N,N,N,N-Tetramethyl-1,3-butanediamine, N,N-Dimethylcyclohexylamine, N,N-Diethylethanolamine, N-Ethylmorpholine, 1-azabicyclo[2.2.2]octane, triethanolamine, N,N-Dimethylpiperazine, Dimethylethanolamine, N-Methylmorpholine, N,N-Dimethylaminopropylamine, N,N,N,N-Tetramethylethylenediamine, 1,3-bis(Dimethylamino)propane, N,N,N,N-Tetramethyl-Hexamethylenediamine, Diethanolamine, N,N-dimethylhexadecylamine, N,N-Diisopropylethanolamine, Ethanolamine (Monoethanolamine), Triethylenediamine, 4-butyl-morpholine, 1,2-Dimethylimidazole, N-[2-(dimethylamino)ethyl]-N-Methylethanol amine, N,N,N,N,N- Pentamethyldiethylenetriamine, bis(2-Dimethylaminoethyl)ether, N,N-bis(1,4-dimethylpentyl)1,4-benzenediamine, N-[3-(dimethylamino)propyl]-N,N,N-trimethyl-1,3-propanediamine, N-cyclohexyldiethanolamine, N-(3-dimethylaminopropyl) formamide, 1,3-bis(Dimethylamino)-2-propanol, 2,2'-dimorpholinodiethylether, Tetramethyl imino-bis(propylamine), N-Methyldicyclohexylamine, 4-(2-methoxyethyl)-morpholine, 2-propanol,1,1'-[[2-[(2-hydroxypropyl)amino]ethyl]imino]bis-, 1,3,5-tris[3-(dimethylamino) propyl]hexahydro-s-triazine, 3-Dimethylamino-N, N-Dimethylpropionamide, N,N-dimethyl-(4-methyl-1-piperazinyl)-ethanamine, Tris(3-Dimethylamino)propylamine, ethanamine, 2,2'-[methylene bis(oxy)]bis[N,N-dimethyl-, 4-(2-aminopropyl)morpholine, 1-[bis(3-dimethylaminopropyl)amino]-2-propanol, N,N,N,N-2-pentamethyl-1,2-propanediamine, N-Methyl,N-(N,N-2-Dimethylaminopropyl)ethanolamine, 2-(2-(2-dimethylamino ethoxy)-ethylmethylamino)-amino, 4-Dimethylaminopyridine (DMAP), 1-methylimidazole, and 1,4-diazabicyclo[2.2.2]octane (DABCO). In still another embodiment, the catalyst is selected from 4-dimethylaminopyridine (DMAP), dimethylethanolamine (DMAE), 1-methylimidazole, and 1,4-diazabiciclo[2.2.2]octane (DABCO).

In another embodiment, optionally in combination with any of the embodiments provided above or below, the catalyst is a metal catalyst. In the present invention the term "metal catalyst" embraces both the embodiment wherein the compound comprises a metal atom as well as the one wherein the compound consists of a metal atom. Illustrative non-limitative examples of metal catalyst are dioctyltindilaurate (DOTL), dibutyltin dilaurate (DBTDL), dibutyltin diacetate (DBTDA), bismuth carboxylates such as bismuth octoate (Bi-OC) and bismuth neodecanoate (Bi-NDE), zinc carboxylates, stannous octoate, stannous oleate and chelates of zirkonium and aluminium. In one embodiment, the catalyst is a tin compound. In another embodiment, the metal catalyst is dibutyl tin dilaurate.

It has been found that when the process of the second aspect of the invention is performed with an aromatic thiol at a molar ratio from 1.1 to 1.8, the aromatic thiol being selected from: a compound of formula (V), or a monomer or polymer comprising two or more thiols which are the same and correspond to one of formula (V), the resulting polymer network comprises units of formula (I), as defined above, but also units of formula (IV): 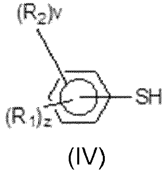 wherein
R₁ and R₂, are as defined above,
"v" is an integer selected from 1 and 2;
"z" is an integer selected from 3 and 4; provided that "v"+"z" is 5,
the molar ratio between the number of moles of units of formula (I) and the number of moles of units of formula (IV) being in the range from 1.0:0.01 to 1.0:0.8.

Alternatively, when the aromatic thiol is a compound of formula (Vbis) or a monomer or polymer comprising two or more thiol groups which are the same and are of formula (Vbis), the resulting polymer network comprises units of formula (I) but also units of formula (IV) as defined above as well as units of formula (IVbis): 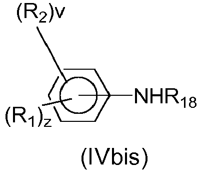 wherein R₁, R₂, "v", "z" and R₁₈ are as defined above,
the molar ratio between the units of formula (I) and the number of moles of units of formula (IV) and (IVbis) being in the range from 1.0:0.01 to 1.0:0.8.

Alternatively, when the aromatic thiol is a thiol monomer or polymer comprising two or more thiol groups which are different between them and are of formula (V) and (Vbis), the resulting polymer network comprises units of formula (I), but also units of formula (IV) as well as of formula (IVbis), as defined above; the molar ratio between the number of moles of units of formula (I) and the total number of moles of units of formula (IV) and (IVbis) being in the range from 1.0:0.01 to 1.0:0.8.

In one embodiment, optionally in combination with any of the embodiments provided above or below, the molar ratio between the units of formula (I) and (IV), or alternatively the molar ratio between the units of formula (I) and the total number of moles of units of formula (IV) and (IVbis), is comprised from 1.0:0.01 to 1.0:0.5. In another embodiment, optionally in combination with any of the embodiments provided above or below, the molar ratio between the units of formula (I) and (IV), or alternatively between the units of formula (I) and the total number of moles of units of formula (IV) and (IVbis), is selected from 1.0:0.1, 1.0:0.2, 1.0:0.3, 1.0:0.4, and 1.0:0.5. In another embodiment, optionally in combination with any of the embodiments provided above or below, the molar ratio between the units of formula (I) and (IV), or alternatively the molar ratio between the units of formula (I) and the total number of moles of units of formula (IV) and (IVbis), is selected from 1.0:0.01, 1.0:0.02, 1.0:0.03, 1.0:0.04, 1.0:0.05, 1.0:0.06, 1.0:0.07, 1.0:0.08, and 1.0:0.09. In another embodiment, optionally in combination with any of the embodiments provided above or below, the molar ratio between the units of formula (I) and (IV), or alternatively between the units of formula (I) and the total number of units of formula (IV) and (IVbis), is 1.0:0.05.

In another embodiment of the first aspect of the invention, optionally in combination with any of the embodiments provided above or below, R₁ and R₁' are selected from: -H, (C₁-C₅)alkyl, -NO₂, and halogen. In another embodiment of the first aspect of the invention, optionally in combination with any of the embodiments provided above or below, R₁ and R₁'are -H.

In another embodiment of the first aspect of the invention, optionally in combination with any of the embodiments provided above or below, X is selected from the group consisting of: -O-, -S-, -CH=CH- and -S(O₂)-. In another embodiment of the first aspect of the invention, optionally in combination with any of the embodiments provided above or below, X is -S-. In another embodiment of the first aspect of the invention, optionally in combination with any of the embodiments provided above or below, R₁' is selected from: -H, (C₁-C₅)alkyl, -NO₂, and halogen, and X is selected from the group consisting of: - O-, -S-, and -S(O₂)-. In another embodiment of the first aspect of the invention, optionally in combination with any of the embodiments provided above or below, R₁'is -H, and X is selected from the group consisting of: -O-, -S-, and -S(O₂)-. In another embodiment of the first aspect of the invention, optionally in combination with any of the embodiments provided above or below, R₁' is -H, and X is -S-.

In another embodiment of the first aspect of the invention, optionally in combination with any of the embodiments provided above or below, R₂ is a radical of formula (II). In another embodiment of the first aspect of the invention, optionally in combination with any of the embodiments provided above or below, R₂ is a radical of formula (II) and Z means -S-. In an alternative embodiment, optionally in combination with any of the embodiments provided above or below, R₂ is a radical of formula (II) and Z is ―-NR₁₇-. In another embodiment of the first aspect of the invention, optionally in combination with any of the embodiments provided above or below, R₂ is a radical of formula (II) and Z means -NH-. In another embodiment of the first aspect of the invention, optionally in combination with any of the embodiments provided above or below, R₂ is a radical of formula (II) and "n" is 1. In another embodiment of the first aspect of the invention, optionally in combination with any of the embodiments provided above or below, R₂ is a radical of formula (II), Z means -S-, and "n" is 1. In an alternative embodiment, optionally in combination with any of the embodiments provided above or below, R₂ is a radical of formula (II), Z is ―-NR₁₇-, and "n" is 1. In another embodiment of the first aspect of the invention, optionally in combination with any of the embodiments provided above or below, R₂ is a radical of formula (II), Z means -NH- and "n" is 1.

In another embodiment of the first aspect of the invention, optionally in combination with any of the embodiments provided above or below, "m", and "t" are 4 (and, therefore, "n", and "s" are 1).

In another embodiment of the first aspect of the invention, R₁ and R₁' are selected from -H, (C₁-C₅)alkyl, -NO₂, and halogen; "m", and "t" are 4; and the catalyst compound is one having a boiling temperature in the range from 100 to 250°C. In another embodiment of the first aspect of the invention, R₁ and R₁' are selected from -H, (C₁-C₅)alkyl, -NO₂, and halogen; "m", and "t" are 4; and the catalyst compound is one having a boiling temperature in the range from 100 to 200°C. In another embodiment of the first aspect of the invention, R₁ and R₁' are -H; "m", and "t" are 4; and the catalyst is a metal catalyst or a nitrogen-containing catalyst. In another embodiment of the first aspect of the invention, R₁ and R₁' are -H; "m", and "t" are 4; and the catalyst has a boiling temperature in the range from 100 to 250°C..In another embodiment of the first aspect of the invention, R₁ and R₁' are -H; "m", and "t" are 4; and the catalyst has a boiling temperature in the range from 100 to 200°C. In another embodiment of the first aspect of the invention, R₁ and R₁' are -H; "m", and "t" are 4; and the catalyst is a metal catalyst or a nitrogen-containing catalyst.

In a second aspect, the present invention provides a process for the preparation of the polymer network as defined in the first aspect of the invention.

In the present invention, the term "aromatic reactive groups", when the aromatic thiol-functionalized compound is a monomer or polymer, refers to aromatic moieties with the ability of reacting with an isocyanate group. Illustrative non-limitative examples of such aromatic reactive groups are aromatic thiols.

In one embodiment of the second aspect of the invention, optionally in combination with any of the embodiments provided above or below, the thiol compound is a thiol of formula (V) or (Vbis).

In another embodiment of the second aspect of the invention, optionally in combination with any of the embodiments provided above or below, the thiol compound is a monomer or polymer having two or more aromatic thiols of formula (V). In another embodiment of the second aspect of the invention, optionally in combination with any of the embodiments provided above or below, the thiol compound is a polymer having two or more aromatic thiols of formula (V).

The term "monomer or polymer having two or more aromatic thiols of formula (V)" refers to any monomer or polymer which comprises, as substituents, two or more thiols of formula (V). In another embodiment of the second aspect of the invention, optionally in combination with any of the embodiments provided above or below, the monomer or polymer has two aromatic thiols of formula (V). In another embodiment of the second aspect of the invention, optionally in combination with any of the embodiments provided above or below, the monomer or polymer comprises as unique aromatic reactive groups thiols of formula (V).

Alternatively, in another embodiment of the second aspect of the invention, optionally in combination with any of the embodiments provided above or below, the monomer or polymer comprises thiols of formula (Vbis) as unique aromatic reactive groups.

Alternatively, in another embodiment of the second aspect of the invention, optionally in combination with any of the embodiments provided above or below, the monomer or polymer comprises thiols of formula (V) and of formula (Vbis) as unique aromatic reactive groups.

The terms "isocyanate-functionalised polymer" and "polymer having two or more aromatic thiols of formula (V)" also encompasses pre-polymers, which are polymers wherein there are reactive groups that can be submitted to further polymerization reactions.

The term "functionality equal or higher than 2" means that the polymer comprises at least two isocyanate groups. In one embodiment, optionally in combination with any of the embodiments provided above or below, the isocyanate-functionalised compound is a polymer comprising from 2 to 50 isocyanate groups. In another embodiment, optionally in combination with any of the embodiments provided above or below, the isocyanate-functionalised compound is a polymer comprising from 2 to 20 isocyanate groups. In still another embodiment, optionally in combination with any of the embodiments provided above or below, the isocyanate-functionalised compound is a polymer comprising from 2 to 10 isocyanate groups. In still another embodiment, optionally in combination with any of the embodiments provided above or below, the isocyanate-functionalised compound is a polymer comprising from 2 to 3 isocyanate groups. In another embodiment, optionally in combination with any of the embodiments provided above or below, the isocyanate-functionalised compound is an isocyanate-functionalized pre-polymer comprising from 2 to 20 isocyanate groups. In another embodiment, optionally in combination with any of the embodiments provided above or below, the isocyanate-functionalised compound is an isocyanate-functionalized pre-polymer comprising from 2 to 3 isocyanate groups.

In the present invention, the term "total number of moles of reactive groups" has a particular meaning depending on the starting aromatic thiol. When the aromatic thiol is the compound of formula (V), or a monomer or polymer wherein the two or more reactive groups are the same and are of formula (V), then the expression "total number of moles of reactive groups" refers to the total number of thiol groups. When the aromatic thiol is the compound of formula (Vbis), or a monomer or polymer wherein one or more of the reactive groups is of formula (Vbis) or, alternatively, comprises groups of formula (V)+(Vbis), then the expression "total number of moles of reactive groups" refers to the total number of thiol+amine groups.

In one embodiment of the process of the second aspect of the invention, optionally in combination with any of the embodiments provided above or below, the molar ratio between isocyanate: thiol, or between isocyanate: thiol+NHR₁₈, is comprised from 1.00:1.00 to 1.00:1.80. In another embodiment of the process of the second aspect of the invention, optionally in combination with any of the embodiments provided above or below, the molar ratio isocyanate:thiol, or alternatively between isocyanate:thiol+NHR₁₈, is selected from 1.00:1.00, 1.00:1.10, 1.00:1.20, 1.00:1.30, 1.00:1.40, 1.00:1.50, 1.00:1.60, 1.00:1.70, and 1.00:1.80. In another embodiment of the process of the second aspect of the invention, optionally in combination with any of the embodiments provided above or below, the molar ratio between isocyanate:thiol, or alternatively between isocyanate:thiol+NHR₁₈, is selected from 1.00:1.01, 1.00:1.02, 1.00:1.03, 1.00:1.04, 1.00:1.05, 1.00:1.06, 1.00:1.07, 1.00:1.08, and 1.00:1.09. In another embodiment of the process of the second aspect of the invention, optionally in combination with any of the embodiments provided above or below, the molar ratio between isocyanate:thiol, or alternatively between isocyanate:thiol+NHR₁₈, is 1.00:1.05.

In one embodiment of the second aspect of the invention, optionally in combination with any of the embodiments provided above or below, the process comprises the reaction between:
(a) an isocyanate-functionalised compound selected from an isocyanate-functionalised polymer having a functionality equal or higher than 2, and a polyisocyanate monomer having two or more isocyanate groups, and
(b) an aromatic thiol-functionalized compound which is selected from a compound of formula (V) or of formula (Vbis); a thiol monomer having two or more aromatic reactive groups, which are the same or different, and which are selected from a thiol compound of formula (V) and of formula (Vbis); and a polymer having two or more aromatic reactive groups, which are the same or different, and which are selected from a thiol of formula (V) and one of formula (Vbis).

In one embodiment of the second aspect of the invention, optionally in combination with any of the embodiments provided above or below, the process comprises the reaction between (a) an isocyanate-functionalised compound selected from an isocyanate-functionalised polymer having a functionality equal or higher than 2, and a polyisocyanate monomer having two or more isocyanate groups, and (b) an aromatic thiol which is selected from a compound of formula (V), a compound of formula (Vbis), a polythiol monomer having two or more aromatic thiols of formula (V) and a polymer having two or more aromatic thiols of formula (V), as defined above.

In one embodiment of the second aspect of the invention, optionally in combination with any of the embodiments provided above or below, the process comprises the reaction between (i) the isocyanate-functionalised polymer with functionality equal or higher than 2 and (ii) the aromatic compound of formula (V) or of formula (Vbis). In one embodiment of the second aspect of the invention, optionally in combination with any of the embodiments provided above or below, the process comprises the reaction between (i) an isocyanate-functionalised pre-polymer with functionality equal or higher than 2, and (ii) the aromatic compound of formula (V) or of formula (Vbis).

In another embodiment of the second aspect of the invention, optionally in combination with any of the embodiments provided above or below, the isocyanate-functionalised polymer is an isocyanate-functionalised polyurethane with a % NCO content from 1 to 15% (percentage by weight).

The term "percentage (%) by weight" refers to the percentage of NCO in relation to the total weight of the polymer.

These isocyanate terminated polymers can be any commercially available or can be synthesized following well-known methods (E. Delebecq, J. P. et al., 2013; and US3905944).

Particularly, precursors which can be used for the preparation of isocyanate-terminated polymers include, but are not limited to:
- synthetic polymers: polyethylene glycol (PEG), polypropylene glycol (PPG), polytetramethylene glycol (PTMG), acrylates, methacrylates, polyester polyols, polycaprolactone polyols, polyacids, polyvinyl alcohol (PVA), polydimethylsiloxane (PDMS) polyols, calcium polycarbophil, deacetylated gellan gum;
- natural polymers: castor oil, soybean oil, polysaccharides such as chitosan, sodium or calcium carboxymethylcellulose, sodium alginate, condroitin sulphate, sodium hydroxypropylcellulose, hyaluronic acid, pectin; peptides, proteins, and oligonucleotides; polyisoprenes, and
- mixtures of the above mentioned synthetic and natural polymers or copolymers made there from.

Accordingly, in one embodiment, the precursor giving rise to the isocyanate-terminated polymer chain is selected from the group consisting of calcium polycarbophil (a copolymer of acrylic acid and divinyl glycol), chitosan, sodium carboxymethylcellulose, calcium carboxymethylcellulose, sodium alginate, condroitin sulphate, sodium hydroxypropylcellulose, hyaluronic acid, pectin, poly(acrylic acid), poly(methacrylic acid), polyacrylamide, deacetylated gellan gum, polyethylene glycol, polypropylene glycol (PPG), polyester polyol, acrylates, methacrylates, castor oil, soybean oil, polyvinyl alcohol, polycaprolactone polyol, and mixtures thereof.

In another embodiment, the precursor giving rise to the isocyanate-terminated polymer chain is a non-water-soluble polymer whose Tg (glass transition temperature) is below room-temperature, such as PPG, castor oil, polycaprolactone polyols or polyesters, among others.

In another embodiment, the precursor of the OH-terminated polymer is a tris-OH terminated PPG.

In one embodiment, the tris-OH terminated PPG has a number average molecular weight from 150 to 20000 g/mol, from 400 to 10000 g/mol, from 1000 to 6000 g/mol, from 1500 to 5000 g/mol. In one embodiment, the tris-OH terminated PPG has a number average molecular weight of 4000 g/mol.

In the present invention, the term "number average molecular weight" means the total weight of all the polymer molecules in a sample, divided by the total number of polymer molecules in a sample (Mn).

In another embodiment, the PPG reacts with an isocyanate compound in order to obtain an isocyanate terminated polymer.

In one embodiment, the tris-OH terminated PPG reacts with an isocyanate compound in order to obtain a tris-isocyanate terminated polymer.

In another embodiment, the bis-OH terminated PPG reacts with an isocyanate compound in order to obtain a bis-isocyanate terminated polymer.

In another embodiment, the isocyanate compound is a diisocyanate selected from isophorone diisocyanate (IPDI), 4,4'-methylene diphenyl diisocyanate (MDI), toluene 2,4-diisocyanate (TDI), 1,4-tetramethylenediisocyanate, 1,6-hexamethylenediisocyanate (HDI), 1,1, o-decamethylenediisocyanate, 1,5-naphthalenediisocyanate, curnene2, 4-diisocyanate, 4-methoxy- 1,3-phenylenediisocyanate; 4-chloro 1,3-phenylenediisocyanate, 4-bromo 1,3 phenylenediisocyanate, 4-ethoxy 1 ,3-phenylenediisocyanate, 2,4-diisocyanatodiphenylether, 5, 6-dimethyl 1, 3-phenylenediisocyanate, 2,4-dimethyl 1 ,3-phenylenediisocyanate, 4,4'-diisocyanatodiphenylether, benzidinediisocyanate, 4,6-dimethyl 1,3-phenylenediiisocyanate, 9,10-anthracenediisocyanate, 4,4-diisocyanatodibenzyl, 3,3 '-dimethyl-4,4-diisocyanatodiphenylmethane, 2,6diisocyanatostilbene, 3,3 -dimethyl-4,4-diisocyanatodiphenyl, 3,3-dimethoxy-4,4'-diisocyanatodiphenyl, 1,4-anthracenediisocyanate, 2,5-fluorenediisocyanate, 1,5-naphthalenediisocyanate, 1,3-phenylenediisocyanate, 2,6-diisocyanatobenzfuran; 2,4-toluenetriisocyanate and 2,4,4-triisocyanatodiphenylether.

In another embodiment, the isocyanate compound is isophorone diisocyanate (IPDI) or the tri-isocyanate terminated polymer (Voramer MR1101).

In one embodiment, the tris-OH terminated PPG reacts with IPDI in order to obtain a tris-isocyanate terminated polymer.

In another embodiment, the bis-OH terminated PPG reacts with IPDI in order to obtain a bis-isocyanate terminated polymer.

In another embodiment, the tris-OH terminated PPG having a number average molecular weight comprised from 150 to 6000 g/mol reacts with IPDI in order to obtain a tris-isocyanate terminated polymer.

In one embodiment, the tris-OH terminated PPG having a number average molecular weight from about 400 to 4000 g/mol reacts with IPDI in order to obtain a tris-isocyanate terminated polymer.

In another embodiment of the second aspect of the invention, optionally in combination with any of the embodiments provided above or below, R₁ and R₁' are selected from: -H, (C₁-C₅)alkyl, -NO₂, and halogen. In another embodiment of the second aspect of the invention, optionally in combination with any of the embodiments provided above or below, R₁ and R₁' are -H.

In another embodiment of the second aspect of the invention, optionally in combination with any of the embodiments provided above or below, the aromatic compound of formula (V) is one wherein "a" is 1 (and therefore "m" is 4).

In another embodiment of the second aspect of the invention, optionally in combination with any of the embodiments provided above or below, the aromatic compound of formula (Vbis) is one wherein "a" is 1 (and therefore "m" is 4).

In another embodiment of the second aspect of the invention, optionally in combination with any of the embodiments provided above or below, the process comprises the reaction between the isocyanate-functionalised polymer with functionality equal or higher than 2 with an aromatic compound of formula (V) or of formula (Vbis), wherein "a" is 1 (and therefore "m" is 4). In another embodiment, optionally in combination with any of the embodiments provided above or below, the process comprises the reaction between the isocyanate-functionalised polymer comprising from 2 to 20 isocyanate with an aromatic compound of formula (V) or of formula (Vbis), wherein "a" is 1 (and therefore "m" is 4). In still another embodiment, optionally in combination with any of the embodiments provided above or below, the process comprises the reaction between the isocyanate-functionalised polymer comprising from 2 to 10 isocyanate with an aromatic compound of formula (V) or of formula (Vbis), wherein "a" is 1(and therefore "m" is 4). In still another embodiment, optionally in combination with any of the embodiments provided above or below, the process comprises the reaction between the isocyanate-functionalised polymer comprising from 2 to 3 isocyanate with an aromatic compound of formula (V) or of formula (Vbis), wherein "a" is 1 (and therefore "m" is 4).

In another embodiment of the second aspect of the invention, optionally in combination with any of the embodiments provided above or below, the process comprises the reaction between the isocyanate-functionalised polymer with functionality equal or higher than 2 with an aromatic compound of formula (V) or of formula (Vbis), wherein "a" is 1 (and therefore "m" is 4) and R₁ and R'₁ are -H. In another embodiment, optionally in combination with any of the embodiments provided above or below, the process comprises the reaction between the isocyanate-functionalised polymer comprising from 2 to 20 isocyanate with an aromatic compound of formula (V) or of formula (Vbis), wherein "a" is 1 (and therefore "m" is 4) and R₁ and R₁' are -H. In still another embodiment, optionally in combination with any of the embodiments provided above or below, the process comprises the reaction between the isocyanate-functionalised polymer comprising from 2 to 10 isocyanate with an aromatic compound of formula (V) or of formula (Vbis), wherein "a" is 1 (and therefore "m" is 4) and R₁ and R₁' are -H. In still another embodiment, optionally in combination with any of the embodiments provided above or below, the process comprises the reaction between the isocyanate-functionalised polymer comprising from 2 to 3 isocyanate with an aromatic compound of formula (V) or of formula (Vbis), wherein "a" is 1 (and therefore "m" is 4) and R₁ and R₁' are -H. In another embodiment of the second aspect of the invention, optionally in combination with any of the embodiments provided above or below, the process comprises the reaction between the isocyanate-functionalised polymer with functionality equal or higher than 2 with an aromatic compound of formula (V), wherein "a" is 1 (and therefore "m" is 4), R₁ and R'₁ are -H, and R₁₅ is -SH. In another embodiment, optionally in combination with any of the embodiments provided above or below, the process comprises the reaction between the isocyanate-functionalised polymer comprising from 2 to 20 isocyanate with an aromatic compound of formula (V), wherein "a" is 1 (and therefore "m" is 4), R₁ and R'₁ are -H, and R₁₅ is -SH. In still another embodiment, optionally in combination with any of the embodiments provided above or below, the process comprises the reaction between the isocyanate-functionalised polymer comprising from 2 to 10 isocyanate with an aromatic compound of formula (V), wherein "a" is 1 (and therefore "m" is 4), R₁ and R'₁ are -H, and R₁₅ is -SH. In still another embodiment, optionally in combination with any of the embodiments provided above or below, the process comprises the reaction between the isocyanate-functionalised polymer comprising from 2 to 3 isocyanate with an aromatic compound of formula (V), wherein "a" is 1 (and therefore "m" is 4), R₁ and R'₁ are -H, and R₁₅ is -SH.
In another embodiment of the second aspect of the invention, optionally in combination with any of the embodiments provided above or below, the process comprises the reaction between the isocyanate-functionalised polymer with functionality equal or higher than 2 with an aromatic compound of formula (Vbis), wherein "a" is 1 (and therefore "m" is 4), R₁ and R₁' are -H, and R'₁₅ is ―NH₂. In another embodiment, optionally in combination with any of the embodiments provided above or below, the process comprises the reaction between the isocyanate-functionalised polymer comprising from 2 to 20 isocyanate with an aromatic compound of formula (Vbis), wherein "a" is 1 (and therefore "m" is 4), R₁ and R₁' are -H, R'₁₅ is ―NH₂. In still another embodiment, optionally in combination with any of the embodiments provided above or below, the process comprises the reaction between the isocyanate-functionalised polymer comprising from 2 to 10 isocyanate with an aromatic compound of formula (Vbis), wherein "a" is are 1 (and therefore "m" is 4), R₁ and R₁' are -H, and R'₁₅ is ―NH₂. In still another embodiment, optionally in combination with any of the embodiments provided above or below, the process comprises the reaction between the isocyanate-functionalised polymer comprising from 2 to 3 isocyanate with an aromatic compound of formula (Vbis), wherein "a" is 1 (and therefore "m" is 4), R₁ and R₁' are -H, and R'₁₅ is -NH₂.

Aromatic thiol terminated monomers and polymers are commercially available such as 4,4'-dimercaptostilbene, benzene-1,3-dithiol, 4,4'-thiobisbenzenethiol, toluene-3,4-dithiol, 2-aminothiophenol, 3-aminothiophenol and 4 aminothiophenol.

In another embodiment of the process of the second aspect of the invention, optionally in combination with any of the embodiments provided above or below, the temperature is comprised from -30 to 200 °C. In another embodiment of the process of the second aspect of the invention, optionally in combination with any of the embodiments provided above or below, the temperature is comprised from 20 to 120 °C. In another embodiment of the process of the second aspect of the invention, optionally in combination with any of the embodiments provided above or below, the temperature is selected from 20, 25, 30, 40, 50, 60 70, and 75 °C. In another embodiment of the process of the second aspect of the invention, optionally in combination with any of the embodiments provided above or below, the temperature is 70 °C.

All the embodiments provided above under the first aspect of the invention for the catalyst, are also embodiments of the catalyst referred in the process of the second aspect of the invention. Thus, in one embodiment of the second aspect of the invention, optionally in combination with any of the embodiments provided above or below, the catalyst is a metal catalyst, such as tin catalyst, bismuth catalyst or iron catalyst; a; a nitrogen-containing catalyst (such as an amine catalyst or imidazole catalyst); or any combination thereof. In one embodiment of the second aspect of the invention, optionally in combination with any of the embodiments provided above or below, the catalyst is a nitrogen-containing catalyst or a metal catalyst. In one embodiment of the process of the second aspect of the invention, optionally in combination with any of the embodiments provided above or below, the catalyst is a nitrogen-containing catalyst. In one embodiment of the process of the second aspect of the invention, optionally in combination with any of the embodiments provided above or below, the catalyst is an amine-containing catalyst. In one embodiment of the process of the second aspect of the invention, optionally in combination with any of the embodiments provided above or below, the "amine" can be selected from the group consisting of a tertiary amine, an amine initiated polypropylene glycol, an aliphatic amine, and amine-containing ring systems. In one embodiment of the process of the second aspect of the invention, optionally in combination with any of the embodiments provided above or below, the catalyst can be a polyether amine; alternatively, a polyalkylene amine; or alternatively, a tertiary amine polyol. In one embodiment of the process of the second aspect of the invention, optionally in combination with any of the embodiments provided above or below, the amine catalyst can be a polyamine comprising at least two amine groups. In one embodiment of the process of the second aspect of the invention, optionally in combination with any of the embodiments provided above or below, the catalyst comprises an amine radical of formula NR₂₂R₂₃R₂₄, wherein R₂₂, R₂₃ and R₂₄ are as defined above.

The process of the second aspect of the invention also comprises, in one embodiment, the addition of solvents, plasticizers, pigments, organic or inorganic fillers, adhesion promoter, UV-stabilizers, rheology modifiers, and/or flame-retardant additives, which are those used in the polymer manufacturing and are well-known for those skilled in the art. Reference is made, for instance, to Harper C. A., "Modern Plastics Handbook", Chapter 4, 1999, pages 4.1-5.0; G. Wypych, "Handbook of Plasticizers", Ed.: ChemTec Publishing, Chapter 11, 2004, pages 273-379; and Bolgar "M". et al. "Handbook for the chemical analysis of plastics and polymer additives", Ed.: CRC Press, Chapters 3 to 9, 2008, pages 27-303.

In a third aspect, the present invention provides an injectable, reprocessable and recyclable polymer network obtainable by the process as defined in the second aspect of the invention.

The term "obtainable" and "obtained" have the same meaning and are used interchangeably. In any case, the expression "obtainable" encompasses the term "obtained".

In a fourth aspect, the present invention provides a process for recycling the injectable, reprocessable and recyclable crosslinked polymer as defined in the first and third aspects of the invention.

In one embodiment of the process of the fourth aspect of the invention, the polymer network is grinded previous to the step of recycling. In such case, the material can be milled in a cutting mill (Pulverisette) after being freezed in liquid nitrogen. The grinded material is then reprocessed by conventional injection molding technology. Alternatively, the material can be recycled by hot pressing from a component of a given geometry to a different geometry and shape.

In another embodiment of the process of the fourth aspect of the invention, the temperature is comprised from 140 to 250 °C. In another embodiment the temperature is 160 °C.

Furthermore, the present invention covers all possible combinations of particular and preferred groups described hereinabove.

In a fifth aspect the present invention provides an article of manufacture made of the injectable, reprocessable and recyclable cross-linked polymer as defined in the first and third aspects of the invention.

Due to the properties shown, the polymer of the invention can be used for the manufacturing of: (a) lens; (b) optical fibers; (c) coatings and (d) fiber reinforced polymer composites.

In a sixth aspect the present invention provides a method for the manufacture of an article as defined in the fifth aspect of the invention.

In one embodiment, the article is prepared following the RIM technique. "R".I."M". (Reaction Injection Molding) is a technique to produce plastic parts by low-pressure injection of resins in molds. Different types of molds are applicable, among which resin molds are the most frequently used. Different molds can be used, depending on trade off series, size of the part and speed. In one embodiment, the article is prepared formulating the polymer as a two-component reactive system wherein one of the components is based on an isocyanate- or aromatic thiol-functionalised polymer and the second component is a crosslinker based on an aromatic thiol or isocyanate compound, respectively. Prior to application, the components and catalyst have to be mixed and well homogenized, and then the mixture is injected in the RIM process. The order in which the two components and the catalyst are mixed is not critical for obtaining the polythiourethane of the invention. For illustrative purposes, the catalyst can be firstly mixed with the aromatic thiol and then the resulting mixture is mixed with the isocyanate compound; or, alternatively, all three components, the catalyst, the aromatic thiol compound and the isocyanate compound, are mixed together. After the application, the system must be allowed to cure in order to obtain a solid material.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### Examples

### Materials

Trifunctional poly(propylene glycol) (PPG) of Mn 4000 molecular weight was purchased from Bayer Materials Science.

Trifunctional aromatic isocyanate terminated prepolymer Voramer MR1101 was purchased from Dow Chemical.

The aliphatic thiol Glykol Di(3-mercaptopropionate) Thiocure was purchased from PPG Industries.

Isophorone diisocyanate (IPDI), dimethylethanolamine (DMAE), 1-methylimidazole, 1,4-diazabiciclo[2.2.2]octane (DABCO), dibutyltin dilaurate (DBTDL), 1,3-benzenedithiol, , 4,4'-thiobisbenzenethiol, 2-aminothiophenol, triethylamine, 4-(Dimethylamino)pyridine (DMAP) and tetrahydrofurane (THF) were purchased from Sigma-Aldrich and were used without further purification.

### Methods

Oscillatory temperature ramp experiments were carried out in a TA instrument AR2000ex rheometer using a 25 mm plate-plate geometry on polythiourethane elastomer samples with thicknesses of 1 mm. A 1% strain step at a constant gap, 1 Hz frequency and normal force of 2 "N" was applied. Prior to the experiments, it was checked that 10 % deformation was within the linear range using strain sweep experiments.

Fourier transform infrared (FTIR) spectra were registered in a Jasco FT/IR 4100 spectrophotometer, using Gladi ATR accessory and collecting 32 scans at a resolution of 4 cm⁻¹.

### Synthesis of a tris-isocyanate terminated prepolymer

Synthesis of a tris-isocyanate terminated prepolymer was carried out by feeding trifunctional PPG (Mn 4000, 100 g, 16.67 mmol) and IPDI (11.65 g, 52.48 mmol) into a 1 L glass reactor equipped with a mechanical stirrer and a vacuum inlet. The reaction was catalyzed with 100 ppm of DBTDL and evolved at 70 °C for 30 minutes under vacuum and high shear mechanical stirring. The reaction was monitored by FTIR spectroscopy (isocyanate peak at 2264 cm⁻¹).

The resulting tris-isocyanate terminated prepolymer was obtained in the form of a colourless liquid and stored in a tightly closed glass bottle.

The NCO content of the obtained prepolymer was determined by FT-IR monitored titration with "n"-butylamine, following the disappearance of the NCO signal at 2264 cm⁻¹. The determined NCO content (2.75%) was in accordance with the theoretical estimation (1.89%).

### Example 1: Synthesis of various polythiourethanes of the invention (PTU1a-g)

In a 250 mL glass reactor, the tris-isocyanate terminated prepolymer (25 g) was degassed under vacuum. Then, the benzene-1,3-dithiol (1.22 g) and DMAP catalyst (100 ppm) were added. The isocyanate/thiol ratio was 1:1.05.

The obtained mixture was placed in a mould in the form of a 1 mm film; the curing was allowed to proceed for 16h at 60°C and was monitored by FTIR spectroscopy following the disappearance of the NCO signal at 2264 cm-1.

The resulting polythiourethane (PTU1a) was obtained as a transparent elastomeric material.

The same process was repeated but changing the DMAP catalyst by dimethylethanolamine (DMAE) (PTU1b), 1-methylimidazole (PTU1c), 1,4-diazabiciclo[2.2.2]octane (DABCO) (PTU1d) or dibutyltin dilaurate (DBTDL) (PTU1e). In all cases the resulting polythiourethane of the invention was obtained as a transparent elastomeric material.

The same process was repeated but changing the benzene-1,3-dithiol aromatic thiol compound by 4,4'-thiobisbenzenethiol (2.10 g) (PTU1f) and using DMAP as catalyst. The resulting polythiourethane of the invention was obtained as a transparent elastomeric material.

The same process was repeated but changing the benzene-1,3-dithiol aromatic thiol compound by 2-aminothiophenol (0.91 g) (PTU1g), where the molar ratio of isocyanate/(thiol+amino) was 1:1.05 and using DMAP as catalyst. The resulting polythiourethane of the invention was obtained as a yellowish elastomeric material.

### Example 2: synthesis of polythiourethanes for comparative purposes (PTU2a-c)

- PTU2a polythiourethane polymer was obtained following the same synthesis as reported in Example 1, but changing DMAP catalyst by triethylamine as catalyst, at 100 ppm. The resulting polythiourethane was transparent.
- PTU2b polythiourethane polymer was obtained following the same synthesis as reported in Example 1, but changing isocyanate/thiol molar ratio to 1:0.8. Thus, 5g of degassed tris-isocyanate terminated prepolymer was reacted with 0.18 g of benzene-1,3-dithiol in the presence of DMAP catalyst (100 ppm). The resulting polythiourethane was transparent.
- PTU2c was obtained following the same procedure as reported in Example 1, but changing the tris-isocyanate terminated prepolymer by Voramer MR1101 (20 g), which is a tris-isocyanate terminated prepolymer containing aromatic isocyanate moieties; the aliphatic thiol by Glykol Di(3-mercaptopropionate) (Thiocure) (6.49 g) and the DMAP catalyst (100 ppm) were added. The resulting polythiourethane was obtained as a yellowish elastomeric material.

### Results and discussion

Temperature ramp cycles were carried out in order to analyze the dynamic and reversible behavior of the thiourethane moiety.

Fig. 1a-1g show the behavior of the storage modulus (G') and loss modulus (G") as a function of temperature for PTU1a-g (polymer networks of the invention). Values were provided by TA instrument AR2000ex rheometer. G' and G" values decreased with increasing the temperature because of the breakage of thiourethane bonds. It can also be observed that the material flows (injectable) at high temperatures because G" value exceeds G' value. The material recovers its initial modulus after cooling it, demonstrating reprocessability. In addition, the same test was repeated 3 cycles with the same PTU1a sample to ensure the repeatability, and therefore the multiple reprocessability of the material.

The same procedure was repeated with PTU2a material, which was synthesized using triethylamine as catalyst (Fig. 2a). The transition from liquid to solid can also be observed after cooling. However, it does not recover its initial modulus after cooling it to room temperature. This could be due to the partial evaporation of the catalyst at the state transition temperature, acknowledged that the triethylamine's boiling point is 90°C. The lack of catalyst in the cooling process would prevent the correct and complete polymerization reaction, leading to a reprocessed material with different properties than the pristine material.

Thus, we can conclude that a high boiling point catalyst is necessary in order to obtain an injectable polythiourethane network where the mechanical properties of the reprocessed material are the same than the mechanical properties of the pristine network.

With the aim of analyzing whether an excess of thiol moieties is necessary to achieve the dynamic behavior a temperature ramp was carried out. Fig. 2b shows the storage modulus (G') and loss modulus (G") dependence with temperature for PTU2b material. It can be observed that it does not flow at high temperatures (G' is higher than G") as it does the PTU1a reference material and heating above 225°C the material gets degraded. Consequently, it can be concluded that a small excess of thiol is needed to achieve the dynamic behavior, and therefore, its reprocessability and injectability.

Finally, the same oscillatory temperature ramp experiment was carried out in PTU2c material in order to corroborate that the aromatic thiol moiety is a main requirement to achieve injectability. The obtained results are shown in Fig. 2c. As it can be observed, PTU2c material does not flow, even after heating at 200°C, and heating above 200°C the material gets degraded. Thus, it can be concluded that an aromatic group is needed to be linked to the thiol group in order to achieve the state transition of the material, and therefore to obtain a reprocessable and an injectable material.

### Citation List

(IUPAC, 1996, 68, 2287 (Glossary of basic terms in polymer science (IUPAC Recommendations 1996)) on page 2289);
E. Delebecq, et al., "On the Versatility of Urethane/Urea Bonds: Reversibility, Blocked Isocyanate, and Non-isocyanate Polyurethane", Chem. Rev., 2013, v. 113, p. 80-118;
Harper C. A., "Modern Plastics Handbook", Chapter 4, 1999, pages 4.1-5.0; G. Wypych, "Handbook of Plasticizers", Ed.: ChemTec Publishing, Chapter 11, 2004, pages 273-379;
Bolgar "M". et al. "Handbook for the chemical analysis of plastics and polymer additives", Ed.: CRC Press, Chapters 3 to 9, 2008, pages 27-303; and
US3905944.

## Claims

1. An injectable, reprocessable and recyclable polymer network comprising
a) units of formula (I) 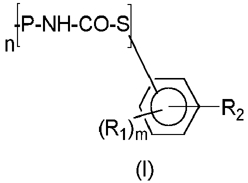 wherein
R₂ is a radical selected from the group consisting of radicals of formula (II), and (III):
*―Z-CO-NH-P (II) 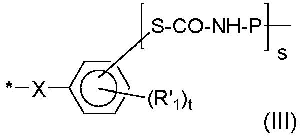
R₁ and R₁' are radicals independently selected from the group consisting of: -H, (C₁-C₂₀)alkyl, (C₅-C₁₄)aryl, -OR₃, -(CO)R₄, -O(CO)R₅, -(SO)R₆, -NH-CO-R₇, -COORs, -S-CO-NH-R₉, -NR₁₀R₁₁, -NO₂, -SH and halogen;
P is a polymeric chain,
* denotes the position through which R₂ binds to the phenyl ring of the unit of formula (I),
X is a biradical selected from the group consisting of: -CH₂-, -CH=CH-, -O-, -S-, -CO-, -S(O₂)-, -Si(R₁₂R₁₃)-, and -NH-;
Z is a radical selected from -S- and ―NR₁₇-;
R₃ to R₁₁ are radicals independently selected from the group consisting of: (C₁-C₂₀)alkyl, and (C₅-C₁₄)aryl;
R₁₂ and R₁₃ are radicals independently selected from the group consisting of (C₁-C5)alkyl, and (C₅-C₁₄)aryl;
R₁₇ is selected from the group consisting of -H, (C₁-C₂₀)alkyl, and (C₅-C₁₄)aryl;
(C₅-C₁₄)aryl represents a ring system with 1-3 rings which comprises from 5 to 14 carbon atoms, the rings being saturated, partially unsaturated, or aromatic; and being fused, partially fused or isolated; being at least one of the rings an aromatic ring; and the ring system being optionally substituted by one or more radicals independently selected from the group consisting of (C₁-C₆)alkyl, (C₁-C₆)haloalkyl, (C₁-C₆)alkoxy, nitro, cyano, and halogen;
"m" is an integer selected from 3 and 4;
"n" is an integer selected from 1 and 2; provided that "n" + "m" is 5;
"t" is an integer selected from 3 and 4; and
"s" is an integer selected from 1 and 2; provided that "t" + s is 5; and
b) a catalyst compound leading to the formation of a thiourethane bond, the catalyst compound being selected from a metal catalyst and a catalyst compound having a boiling temperature equal or higher than 100 °C when measured at atmospheric pressure.

2. The injectable, reprocessable and recyclable polymer network according to claim 1, wherein Z is -S-.

3. The injectable, reprocessable and recyclable polymer network according to any one of the claims 1-2, which further comprises units of formula (IV) or alternatively units of formula (IV) and (IVbis): 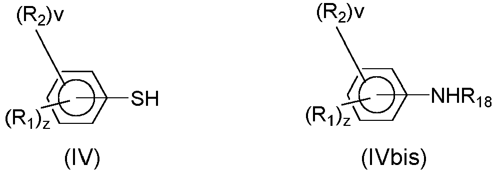 wherein
R₁ and R₂, are as defined in claim 1;
R₁₈ is a radical selected from -H, (C₁-C₂₀)alkyl and (C₅-C₁₄)aryl;
"v" is an integer selected from 1 and 2;
"z" is an integer selected from 3 and 4; provided that v"+"z" is 5;
the molar ratio between the units of formula (I) and the units of formula (IV) or, alternatively, the molar ratio between the units of formula (I) and the units of formula (IV) and (IVbis) being comprised from 1.00:0.01 to 1.00:0.80.

4. The polymer of any one of the preceding claims, wherein R₁ and R₁' are selected from: -H, (C₁-C₅)alkyl, -NO₂, and halogen.

5. The injectable, reprocessable and recyclable polymer of any one of the preceding claims, wherein R₁ and R₁' are -H.

6. The injectable, reprocessable and recyclable polymer of any one of the preceding claims, wherein "m" and "t" are 4.

7. The injectable, reprocessable and recyclable polymer of any one of the preceding claims, wherein the catalyst is a nitrogen-containing catalyst or a metal catalyst.

8. The injectable, reprocessable and recyclable polymer of any one of the preceding claims, wherein the catalyst is selected from 4-dimethylaminopyridine (DMAP), dimethylethanolamine (DMAE), 1-methylimidazole, 1,4-diazabiciclo[2.2.2]octane (DABCO), and dibutyltin dilaurate (DBTDL).

9. A process for preparing an injectable, reprocessable and recyclable polymer as defined in any one of the preceding claims, the process comprising the reaction between (a) an isocyanate-functionalised compound selected from an isocyanate-funtionalised polymer having a functionality equal or higher than 2, and a polyisocyanate monomer having two or more isocyanate groups, and (b) an aromatic thiol-functionalised compound which is selected from:
- a thiol compound of formula (V) or (Vbis): 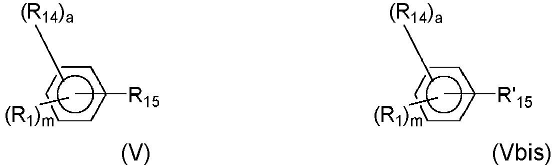
- a thiol monomer having two or more aromatic reactive groups, the same or different, selected from a thiol compound of formula (V) and a thiol compound of formula (Vbis); or a mixture of thiol monomers, each one of them having two or more thiol compounds, the same or different, selected from a thiol of formula (V) and one of formula (Vbis); and
- a polymer having two or more aromatic reactive groups selected from a thiol of formula (V) and a thiol of formula (Vbis),
wherein
R₁₅ is selected from -SH, and a radical of formula (VI) 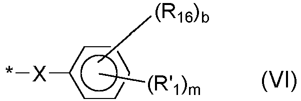
R'₁₅ is ―NHR₁₈;
R₁₈ is a radical selected from -H, (C₁-C₂₀)alkyl and (C₅-C₁₄)aryl;
R₁, R₁', X, "m" are as defined in claim 1,
"a" is an integer selected from 1 and 2; provided that "m" + a is 5,
"b" is an integer selected from 1 and 2; provided that "m" + b is 5, and
R₁₄, and R₁₆ represents -SH,
provided that at least one of the isocyanate-functionalised compound and the aromatic thiol is a polymer,
the reaction being performed:
- at a temperature comprised from -30 to 200 °C,
- in the presence of a catalyst compound leading to the formation of a thiourethane bond between the isocyanate group from the isocyanate-functionalised compound with functionality equal or higher than 2, and the thiol group from the aromatic compound of formula (V), the catalyst compound being selected from a metal catalyst and a compound having a boiling temperature equal or higher than 100 °C at atmospheric pressure, particularly the catalyst being a nitrogen-containing catalyst or a metal catalyst; and
- the molar ratio between the number of moles of isocyanate groups and the total number of moles of reactive groups of the aromatic thiol-functionalized compound is from 1.0 to 1.8, particularly from 1.0 to 1.5.

10. The process of claim 9, wherein the aromatic thiol is selected from a compound of formula (V), a polythiol monomer having two or more aromatic thiols of formula (V) and a polymer having two or more aromatic thiols of formula (V).

11. The process of claim 9, which comprises the reaction between an isocyanate-functionalised polymer having a functionality equal or higher than 2 and a thiol compound of formula (V) or (Vbis).

12. The process of any one of the claims 9-11, which comprises the reaction between an isocyanate-functionalised polymer which comprises from 2 to 50 isocyanate groups, with an aromatic compound of formula (V) or (Vbis).

13. The process of any one of the claims 9-12, wherein the temperature is comprised from 20 to 120°C.

14. A process for recycling an injectable, reprocessable and recyclable crosslinked polymer comprising units of formula (I) as defined in any one of the claims 1 to 8, the process comprising the step of applying pressure and heat to the polymer.

15. An article of manufacture made of the injectable, reprocessable and recyclable cross-linked polymer as defined in any one of the claims 1 to 8.

## Patentansprüche

1. Ein injizierbares, wiederverarbeitbares und recycelbares Polymernetzwerk umfassend
a) Einheiten der Formel (I) 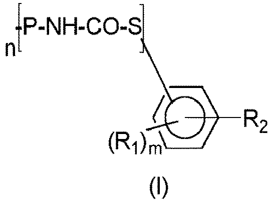 wobei
R₂ ein Radikal ist, das ausgewählt aus der Gruppe bestehend aus den Radikalen der Formel (II) und (III) ist:
*—Z-CO-NH-P (II) 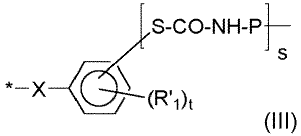
wobei R1 und R1' Radikale sind, die unabhängig voneinander ausgewählt sind aus der Gruppe bestehend aus; -H, (C₁-C₂₀)-Alkyl, (C₅-C₁₄)-Aryl, -OR₃, -(CO)R₄, -O(CO)R₅, -(SO)R₆, - NH-CO-R₇, -COOR₈, -S-CO-NH-R₉, -NR₁₀R₁₁, -NO₂, -SH und Halogen;
P eine Polymerkette ist,
*die Position bezeichnet, über die R₂ an den Phenylring der Einheit der Formel (I) bindet,
X ein Biradikal ist, das ausgewählt ist aus der Gruppe bestehend aus: -CH₂-, -CH=CH-, -O-, - S-, -CO-, -S(O₂)-, -Si(R₁₂R₁₃)-, und -NH-;
Z ein Radikal ausgewählt aus -S- und -NR₁₇- ist;
wobei R₃ bis R₁₁ Radikale sind, die unabhängig voneinander ausgewählt sind aus der Gruppe bestehend aus:
(C₁-C₂₀)-Alkyl, und (C₅-C₁₄)-Aryl;
wobei R₁₂ und R₁₃ Radikale sind, die unabhängig voneinander ausgewählt sind aus der Gruppe bestehend aus (C₁-C₅)-Alkyl, und (C₅-C₁₄)-Aryl;
R₁₇ ausgewählt ist aus der Gruppe bestehend aus H, (C₁-C₂₀)-Alkyl, und (C₅-C₁₄)-Aryl;
(C₅-C₁₄)-Aryl ein Ringsystem mit 1 bis 3 Ringen darstellt, das 5 bis 14 Kohlenstoffatome umfasst, wobei die Ringe gesättigt, teilweise ungesättigt oder aromatisch sind; und fusioniert, teilweise fusioniert oder isoliert sind; wobei mindestens einer der Ringe ein aromatischer Ring ist; und das Ringsystem wahlweise durch ein oder mehrere Radikale substituiert ist, die unabhängig voneinander ausgewählt sind aus der Gruppe bestehend aus (C₁-C₆)-Alkyl, (C₁-C₆)-Halogenalkyl, (C₁-C₆)-Alkoxy, Nitro, Cyano und Halogen;
"m" eine ganze Zahl ausgewählt aus 3 und 4 ist;
"n" eine ganze Zahl ausgewählt aus 1 und 2 ist; unter der Voraussetzung, dass "n" + "m" 5 ist;
"t" eine ganze Zahl ausgewählt aus 3 und 4 ist; und
"s" eine ganze Zahl ausgewählt aus 1 und 2 ist; unter der Voraussetzung, dass "t" + "s" 5 ist; und
b) eine Katalysatorverbindung, die zur Bildung einer Thiourethanbindung führt, wobei die Katalysatorverbindung ausgewählt ist aus einem Metallkatalysator und einer Katalysatorverbindung mit einer Siedetemperatur von 100°C oder höher, gemessen bei atmosphärischen Druck.

2. Das injizierbare, wiederverarbeitbare und recycelbare Polymernetzwerk nach Anspruch 1, wobei Z -S- ist.

3. Das injizierbare, wiederverarbeitbare und recycelbare Polymernetzwerk nach einem der Ansprüche 1 bis 2, das weiterhin Einheiten der Formel (IV) oder ersatzweise Einheiten der Formel (IV) und (IVbis) umfasst: 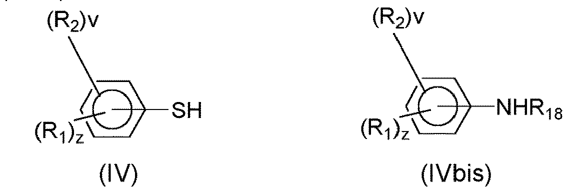 wobei
R₁ und R₂ wie in Anspruch 1 definiert sind;
R₁₈ ein Radikal ist, das aus -H, (C₁-C₂₀)-Alkyl und (C₅-C₁₄)-Aryl ausgewählt ist;
"v" eine ganze Zahl ausgewählt aus 1 und 2 ist;
"z" eine ganze Zahl ausgewählt aus 3 und 4 ist; unter der Voraussetzung, dass "v"+ "z" 5 ist;
das Molverhältnis von den Einheiten der Formel (I) zu den Einheiten der Formel (IV) oder, ersatzweise, das Molverhältnis von den Einheiten der Formel (I) zu den Einheiten der Formel (IV) und (IVbis) von 1,00:0,01 bis 1,00:0,80 reicht.

4. Das Polymer von einem der vorhergehenden Ansprüche, wobei R₁ und R₁' ausgewählt sind aus: -H, (C₁-C₅)-Alkyl, -NO₂, und Halogen.

5. Das injizierbare, wiederverarbeitbare und recycelbare Polymer von einem der vorhergehenden Ansprüche, wobei R₁ und R₁' -H sind.

6. Das injizierbare, wiederverarbeitbare und recycelbare Polymer von einem der vorhergehenden Ansprüche, wobei "m" und "t" 4 sind.

7. Das injizierbare, wiederverarbeitbare und recycelbare Polymer von einem der vorhergehenden Ansprüche, wobei der Katalysator ein stickstoffhaltiger Katalysator oder ein Metallkatalysator ist.

8. Das injizierbare, wiederverarbeitbare und recycelbare Polymer von einem der vorhergehenden Ansprüche, wobei der Katalysator ausgewählt ist aus 4-Dimethylaminopyridin (DMAP), Dimethylethanolamin (DMAE), 1-Methylimidazol, 1,4-Diazabiciclo[2.2.2]octan (DABCO) und Dibutylzinndilaurat (DBTDL).

9. Ein Verfahren zur Herstellung eines injizierbaren, wiederverarbeitbaren und recycelbaren Polymers wie in einem der vorhergehenden Ansprüche definiert, wobei das Verfahren die Reaktion umfasst zwischen (a) einer mit Isocyanat funktionalisierten Verbindung, die ausgewählt ist aus einem mit Isocyanat funktionalisierten Polymer mit einer Funktionalität von 2 oder höher, und einem Polyisocyanatmonomer mit zwei oder mehr Isocyanatgruppen, und (b) einer aromatischen mit Thiol funktionalisierten Verbindung, die ausgewählt ist aus:
- einer Thiolverbindung der Formel (V) oder (Vbis): 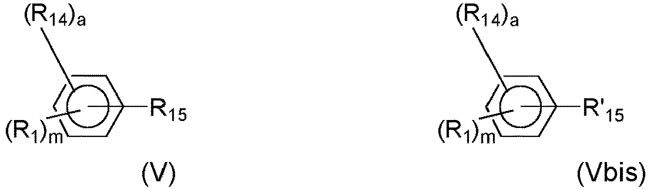
- einem Thiolmonomer mit zwei oder mehr aromatischen reaktiven Gruppen, die gleich oder verschieden sind, ausgewählt aus einer Thiolverbindung der Formel (V) und einer Thiolverbindung der Formel (Vbis); oder einer Mischung aus Thiolmonomeren, von denen jedes zwei oder mehr Thiolverbindungen hat, die gleich oder verschieden sind, ausgewählt aus einem Thiol der Formel (V) und einem der Formel (Vbis); und
- einem Polymer mit zwei oder mehr aromatischen reaktiven Gruppen, ausgewählt aus einem Thiol der Formel (V) und einem Thiol der Formel (Vbis),
wobei
R₁₅ ausgewählt ist aus -SH, und einem Radikal der Formel (VI) 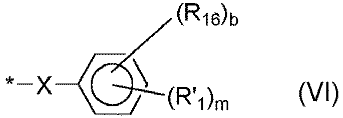
R₁₅' -NHR₁₈ ist;
R₁₈ ein Radikal ist, das aus -H, (C₁-C₂₀)-Alkyl und (C₅-C₁₄)-Aryl ausgewählt ist;
R₁, R₁', X, "m" wie in Anspruch 1 definiert sind,
"a" eine ganze Zahl ausgewählt aus 1 und 2 ist; unter der Voraussetzung, dass "m" + "a" 5 ist;
"b" eine ganze Zahl ausgewählt aus 1 und 2 ist; unter der Voraussetzung, dass "m" + "b" 5 ist, und
R₁₄ und R₁₆ -SH darstellt,
unter der Voraussetzung, dass mindestens eines von der mit Isocyanat funktionalisierten Verbindung und dem aromatischen Thiol ein Polymer ist,
wobei die Reaktion unter folgenden Bedingungen durchgeführt wird:
- bei einer Temperatur reichend von ca. -30 bis 200 °C,
- in Gegenwart einer Katalysatorverbindung, die zur Bildung einer Thiourethanbindung zwischen der Isocyanatgruppe der mit Isocyanat funktionalisierten Verbindung mit einer Funktionalität von 2 oder höher, und der Thiolgruppe der aromatischen Verbindung der Formel (V) führt, wobei die Katalysatorverbindung ausgewählt ist aus einem Metallkatalysator und einer Verbindung mit einer Siedetemperatur von 100°C oder höher bei atmosphärischen Druck, insbesondere wobei der Katalysator ein stickstoffhaltiger Katalysator oder ein Metallkatalysator ist; und
- das Molverhältnis von der Anzahl der Mole von Isocyanatgruppen zu der gesamten Anzahl der Mole von reaktiven Gruppen der aromatischen mit Thiol funktionalisierten Verbindung von 1,0 bis 1,8, insbesondere von 1,0 bis 1,5 reicht.

10. Das Verfahren des Anspruchs 9, wobei das aromatische Thiol ausgewählt ist aus einer Verbindung der Formel (V), einem Polythiolmonomer mit zwei oder mehr aromatischen Thiolen der Formel (V) und einem Polymer mit zwei oder mehr aromatischen Thiolen der Formel (V).

11. Das Verfahren des Anspruchs 9, welches die Reaktion zwischen einem mit Isocyanat funktionalisierten Polymer mit einer Funktionalität von 2 oder höher und einer Thiolverbindung der Formel (V) oder (Vbis) umfasst.

12. Das Verfahren von einem der Ansprüche 9 bis 11, welches die Reaktion zwischen einem mit Isocyanat funktionalisierten Polymer, das 2 bis 50 Isocyanatgruppen umfasst, mit einer aromatischen Verbindung der Formel (V) oder (Vbis) umfasst.

13. Das Verfahren von einem der Ansprüche 9 bis 12, wobei die Temperatur von 20 bis 120 °C reicht.

14. Ein Verfahren zum Recycling eines injizierbaren, wiederverarbeitbaren und recycelbaren vernetzten Polymers umfassend Einheiten der Formel (I) wie in einem der Ansprüche 1 bis 8 definiert, wobei das Verfahren den Schritt des Anwendens von Druck und Hitze auf das Polymer umfasst.

15. Ein Erzeugnis aus dem injizierbaren, wiederverarbeitbaren und recycelbaren vernetzten Polymer wie in einem der Ansprüche 1 bis 8 definiert.

## Revendications

1. Un réseau polymère injectable, retraitable et recyclable comprenant
a) des motifs de formule (I) 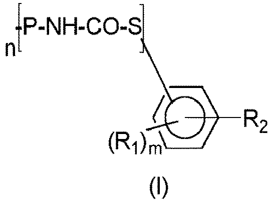 où
R₂ est un radical choisi dans le groupe constitué de radicaux de formule (II), et (III) :
*—Z-CO-NH-P (II) 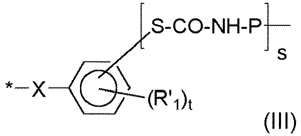
R1 et R1' sont des radicaux indépendamment choisis dans le groupe constitué de : -H, alkyle en (C₁-C₂₀), aryle en (C₅-C₁₄), -OR₃, -(CO)R₄, -O(CO)R₅, -(SO)R₆, -NH-CO-R₇, -COOR₈, -S-CO-NH-R₉, -NR₁₀R₁₁, -NO₂, -SH et halogène ;
P est une chaîne polymère,
* désigne la position par laquelle R₂ se lie au cycle phényle du motif de formule (I),
X est un biradical choisi dans le groupe constitué de : -CH₂-, -CH=CH-, -O-, -S-, -CO-, -S(O₂)-, -Si(R₁₂R₁₃)-, et -NH-;
Z est un radical choisi parmi -S- et -NR₁₇- ;
R₃ à R₁₁ sont des radicaux indépendamment choisis dans le groupe constitué de : alkyle en (C₁-C₂₀), et aryle en (C₅-C₁₄) ;
R₁₂ et R₁₃ sont des radicaux indépendamment choisis dans le groupe constitué d'alkyle en (C₁-C₅) et aryle en (C₅-C₁₄) ;
R₁₇ est choisi dans le groupe constitué de -H, alkyle en (C₁-C₂₀) et aryle en (C₅-C₁₄) ;
aryle en (C₅-C₁₄) représente un système cyclique avec 1 à 3 cycles qui comprend de 5 à 14 atomes de carbone, les cycles étant saturés, partiellement insaturés ou aromatiques; et étant fusionnés, partiellement fusionnés ou isolés ; étant au moins l'un des cycles un cycle aromatique ; et le système cyclique étant facultativement substitué par un ou plusieurs radicaux choisis indépendamment dans le groupe constitué d'alkyle en (C₁-C₆), haloalkyle en (C₁-C₆), alcoxy en (C₁-C₆), nitro, cyano et halogène ;
« m » est un nombre entier choisi parmi 3 et 4;
« n » est un nombre entier choisi parmi 1 et 2; à condition que « n » + « m » soit 5 ;
« t » est un nombre entier choisi parmi 3 et 4; et
« s » est un nombre entier choisi parmi 1 et 2; à condition que « t » + « s » soit 5 ; et
b) un composé catalyseur conduisant à la formation d'une liaison thiouréthane, le composé catalyseur étant choisi parmi un catalyseur métallique et un composé catalyseur ayant une température d'ébullition égale ou supérieure à 100 °C lorsqu'elle est mesurée à pression atmosphérique.

2. Le réseau polymère injectable, retraitable et recyclable selon la revendication 1, dans lequel Z est -S-.

3. Le réseau polymère injectable, retraitable et recyclable selon l'une quelconque des revendications 1 à 2, qui comprend en outre des motifs de formule (IV) ou, alternativement, des motifs de formule (IV) et (IVbis) : 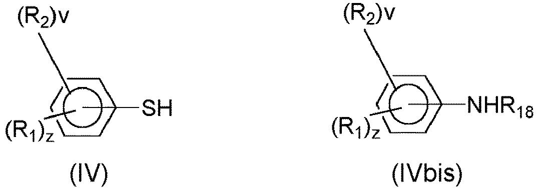 où
R₁ et R₂ sont tels que définis dans la revendication 1;
R₁₈ est un radical choisi parmi H, alkyle en (C₁-C₂₀) et aryle en (C₅-C₁₄) ;
« v » est un nombre entier choisi parmi 1 et 2;
« z » est un nombre entier choisi parmi 3 et 4; à condition que « v »+ « z » soit 5 ;
le rapport molaire entre les motifs de formule (I) et les motifs de formule (IV) ou, en variante, le rapport molaire entre les motifs de formule (I) et les motifs de formule (IV) et (IVbis) sont compris de 1,00 : 0,01 à 1,00 : 0,80.

4. Le polymère de l'une quelconque des revendications précédentes, dans lequel R₁ and R₁' sont choisis parmi : -H, alkyle en (C₁-C₅), -NO₂, et halogène.

5. Le polymère injectable, retraitable et recyclable de l'une quelconque des revendications précédentes, dans lequel R₁ et R₁' sont -H.

6. Le polymère injectable, retraitable et recyclable de l'une quelconque des revendications précédentes, dans lequel « m » et « t » sont 4.

7. Le polymère injectable, retraitable et recyclable de l'une quelconque des revendications précédentes, dans lequel le catalyseur est un catalyseur contenant de l'azote ou un catalyseur métallique.

8. Le polymère injectable, retraitable et recyclable de l'une quelconque des revendications précédentes, dans lequel le catalyseur est choisi parmi la 4-diméthylaminopyridine (DMAP), la diméthyléthanolamine (DMAE), le 1-méthylimidazole, le 1,4-diazabiciclo[2.2.2]octane (DABCO) et le dilaurate de dibutylétain (DBTDL).

9. Un procédé de préparation d'un polymère injectable, retraitable et recyclable tel que défini dans l'une quelconque des revendications précédentes, le procédé comprenant la réaction entre (a) un composé à fonction isocyanate choisi parmi un polymère à fonction isocyanate ayant une fonctionnalité égale ou supérieure à 2, et un monomère polyisocyanate ayant deux groupes isocyanate ou plus, et (b) un composé à fonction thiol aromatique qui est choisi parmi :
- un composé thiol de formule (V) ou (Vbis) : 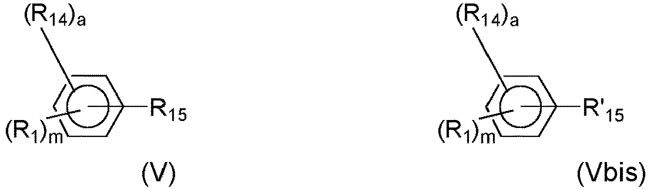
- un monomère thiol ayant deux ou plusieurs groupes réactifs aromatiques, identiques ou différents, choisis parmi un composé thiol de formule (V) et un composé thiol de formule (Vbis) ; ou un mélange de monomères thiol, chacun d'eux ayant deux ou plusieurs composés thiol, identiques ou différents, choisis parmi un thiol de formule (V) et un de formule (Vbis) ; et
- un polymère ayant deux ou plusieurs groupes réactifs aromatiques choisis parmi un thiol de formule (V) et un thiol de formule (Vbis),
où
R₁₅ est choisi parmi -SH, et un radical de formule (VI) 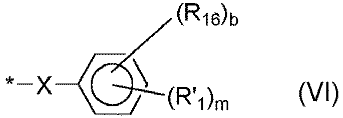
R₁₅' est -NHR₁₈;
R₁₈ est un radical choisi parmi H, alkyle en (C₁-C₂₀) et aryle en (C₅-C₁₄) ;
R₁, R₁', X, « m » sont tels que définis dans la revendication 1,
« a » est un nombre entier choisi parmi 1 et 2; à condition que « m » + « a » soit 5 ;
« b » est un nombre entier choisi parmi 1 et 2; à condition que « m » + « b » soit 5, et
R₁₄ et R₁₆ représente -SH,
à condition qu'au moins l'un du composé à fonction isocyanate et du thiol aromatique soit un polymère,
la réaction étant effectuée :
- à une température comprise de -30 à 200 °C,
- en présence d'un composé catalyseur conduisant à la formation d'une liaison thiouréthane entre le groupe isocyanate du composé à fonction isocyanate de fonctionnalité égale ou supérieure à 2, et le groupe thiol du composé aromatique de formule (V), le composé catalyseur étant choisi parmi un catalyseur métallique et un composé ayant une température d'ébullition égale ou supérieure à 100°C à pression atmosphérique, en particulier le catalyseur étant un catalyseur contenant de l'azote ou un catalyseur métallique ; et
- le rapport molaire du nombre de moles de groupes isocyanate au nombre total de moles de groupes réactifs du composé aromatique à fonction thiol est de 1,0 à 1,80, en particulier de 1,0 à 1,5.

10. Le procédé de la revendication 9, dans lequel le thiol aromatique est choisi parmi un composé de formule (V), un monomère polythiol ayant deux ou plusieurs thiols aromatiques de formule (V) et un polymère ayant deux ou plusieurs thiols aromatiques de formule (V).

11. Le procédé de la revendication 9, qui comprend la réaction entre un polymère à fonction isocyanate ayant une fonctionnalité égale ou supérieure à 2 et un composé thiol de formule (V) ou (Vbis).

12. Le procédé de l'une quelconque des revendications 9 à 11, qui comprend la réaction entre un polymère à fonction isocyanate qui comprend de 2 à 50 groupes isocyanate, avec un composé aromatique de formule (V) ou (Vbis).

13. Le procédé de l'une quelconque des revendications 9 à 12, dans lequel la température est comprise de 20 à 120 °C.

14. Un procédé de recyclage d'un polymère réticulé injectable, retraitable et recyclable comprenant des motifs de formule (I) tel que défini dans l'une quelconque des revendications 1 à 8, le procédé comprenant l'étape d'application de pression et de chaleur au polymère.

15. Un article manufacturé constitué du polymère réticulé injectable, retraitable et recyclable tel que défini dans l'une quelconque des revendications 1 à 8.
